(19) Europäisches Patentamt European Patent Office Office européen des brevets

(11) **EP 3 449 423 B1**

(12) **FASCICULE DE BREVET EUROPEEN**

(45) Date de publication et mention de la délivrance du brevet:
**21.07.2021 Bulletin 2021/29**

(21) Numéro de dépôt: **17719605.2**

(22) Date de dépôt: **27.04.2017**

(51) Int Cl.:
*G06N 3/04* $^{(2006.01)}$     *G06N 3/063* $^{(2006.01)}$
*G06T 1/60* $^{(2006.01)}$

(86) Numéro de dépôt international:
**PCT/EP2017/060016**

(87) Numéro de publication internationale:
**WO 2017/186829 (02.11.2017 Gazette 2017/44)**

(54) **DISPOSITIF ET PROCEDE DE CALCUL DE CONVOLUTION D'UN RESEAU DE NEURONES CONVOLUTIONNEL**

VORRICHTUNG UND VERFAHREN ZUR BERECHNUNG DER FALTUNG IN EINEM NEURONALEN FALTUNGSNETZWERK

DEVICE AND METHOD FOR CALCULATING CONVOLUTION IN A CONVOLUTIONAL NEURAL NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.04.2016 FR 1653745**

(43) Date de publication de la demande:
**06.03.2019 Bulletin 2019/10**

(73) Titulaire: **Commissariat à l'Énergie Atomique et aux Énergies Alternatives 75015 Paris (FR)**

(72) Inventeurs:
• **BICHLER, Olivier**
  **91300 Massy (FR)**
• **DUPRET, Antoine**
  **91400 Orsay (FR)**
• **LORRAIN, Vincent**
  **91120 Palaiseau (FR)**

(74) Mandataire: **Marks & Clerk France Immeuble "Visium" 22, avenue Aristide Briand 94117 Arcueil Cedex (FR)**

(56) Documents cités:
• **T. SERRANO-GOTARREDONA ET AL: "ConvNets experiments on SpiNNaker", 2015 IEEE INTERNATIONAL SYMPOSIUM ON CIRCUITS AND SYSTEMS (ISCAS), 1 mai 2015 (2015-05-01), pages 2405-2408, XP055350602, DOI: 10.1109/ISCAS.2015.7169169 ISBN: 978-1-4799-8391-9**
• **FRANCESCO GALLUPPI ET AL: "A hierachical configuration system for a massively parallel neural hardware platform", PROCEEDINGS OF THE 9TH CONFERENCE ON COMPUTING FRONTIERS (CF'12), 15 mai 2012 (2012-05-15), pages 183-192, XP055179253, DOI: 10.1145/2212908.2212934 ISBN: 978-1-45-031215-8**
• **JOSÉ ANTONIO PÉREZ-CARRASCO ET AL: "Mapping from frame-driven to frame-free event-driven vision systems by low-rate rate coding and coincidence processing: application to feedforward ConvNets (w/ appendices)", IEEE TRANSACTIONS ON PATTERN ANALYSIS AND MACHINE INTELLIGENCE, vol. 35, no. 11, 10 avril 2013 (2013-04-10), pages 2706-2719, XP055247113, USA ISSN: 0162-8828, DOI: 10.1109/TPAMI.2013.71**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique**

La présente invention concerne de manière générale les réseaux de neurones artificiels et en particulier un dispositif et un procédé de calcul de convolution d'un réseau de neurones convolutionnels.

Les réseaux de neurones artificiels constituent des modèles de calculs imitant le fonctionnement des réseaux de neurones biologiques. Les réseaux de neurones artificiels comprennent des neurones interconnectés entre eux par des synapses, qui sont classiquement implémentées par des mémoires numériques. Les synapses peuvent être également implémentées par des composants résistifs dont la conductance varie en fonction de la tension appliquée à leurs bornes. Les réseaux de neurones artificiels sont utilisés dans différents domaines de traitement du signal (visuel, sonore, ou autre) comme par exemple dans le domaine de la classification d'image ou de la reconnaissance d'image.

Les réseaux de neurones convolutionnels correspondent à un modèle particulier de réseau de neurones artificiels. Les réseaux de neurones convolutionnels ont été décrits initialement dans l'article de K. Fukushima, « Neocognitron: A self-organizing neural network model for a mechanism of pattern recognition unaffected by shift in position. Biological Cybernetics, 36(4):193-202, 1980. ISSN 0340-1200. doi: 10.1007/BF00344251 ».

Les réseaux de neurones convolutionnels (désignés en langue anglo-saxonne par les expressions "convolutional neural networks", ou "deep (convolutional) neural networks" ou encore "ConvNets") sont des réseaux de neurones sans rétro-action (« feedforward »), inspirés par les systèmes visuels biologiques.

Les réseaux de neurones convolutionnels (CNN) sont utilisés notamment dans des systèmes de classifications d'images pour accélérer la classification. Appliqués à la reconnaissance d'images, ces réseaux permettent un apprentissage des représentations intermédiaires d'objets dans les images qui sont plus petites et généralisables pour des objets similaires, ce qui facilite leur reconnaissance. Cependant, le fonctionnement intrinsèquement parallèle et la complexité des classificateurs classiques de type réseau de neurones convolutionnels mettent un frein à leur implémentation efficace dans les systèmes embarqués. En effet, les systèmes embarqués imposent de fortes contraintes en matière de surface et de consommation.

Des solutions ont été proposées pour implémenter les réseaux de neurones sur processeur graphique GPU afin d'améliorer leurs performances, comme par exemple la solution décrite dans l'article de D. C. Ciresan, U. Meier, J. Masci, L. M. Gambardella, and J. Schmidhuber, « Flexible, high performance convolutional neural networks for image classification. Proceedings of the Twenty-Second International Joint Conférence on Artificial Intelligence - Volume Two», IJCAI' 11, pages 1237-1242, 2011. ISBN 978-1-57735-514-4. doi: 10.5591/978-1-57735-516-8/ IJCAI11-210.

Plusieurs implémentations matérielles de réseau convolutionnel impulsionnel ont notamment été proposées dans L. Camunas-Mesa, C. Zamarreno-Ramos, A. Linares-Barranco, A. Acosta-Jimenez, T. Serrano- Gotarredona, and B. Linares-Barranco. An event-driven multi-kernel convolution processor module for event-driven vision sensors. Solid-State Circuits, IEEE Journal of, 47(2):504-517, 2012. ISSN 0018-9200. doi: 10.1109/JSSC.2011.2167409. Une telle implémentation de convolution utilise une mémoire numérique séparée pour stocker les coefficients des noyaux de convolution et nécessite de copier ces coefficients du noyau de la mémoire à l'unité de calcul (ALU) à chaque arrivée d'impulsion.

Une autre solution, appelée "TrueNorth", a été proposée dans Paul A. Merolla, John V. Arthur, Rodrigo Alvarez-Icaza, Andrew S. Cassidy, Jun Sawada, Filipp Akopyan, Bryan L. Jackson, Nabil Imam, Chen Guo, Yutaka Nakamura, Bernard Brezzo, Ivan Vo, Steven K. Esser, Rathinakumar Appuswamy, Brian Taba, Arnon Amir, Myron D. Flickner, William P. Risk, Rajit Manohar, and Dharmendra S. Modha, "A million spiking-neuron integrated circuit with a scalable communication network and interface Science", 8 August 2014: 345 (6197), 668-673. Cette solution fournit une puce neuromorphique basée sur une architecture multi-cœur comprenant des unités de calcul classiques spécialisées dans les modèles de neurones impulsionnels. Elle est notamment basée sur une architecture et contient 268 millions de synapses par puce, réparties sur 4096 cœurs contenant 256 neurones. Chaque cœur utilise une SRAM pour créer une connexion binaire entre les entrées/sorties et chaque cœur à une précision synaptique de 3 niveaux. Les cœurs fonctionnent de façon asynchrone. Une telle solution n'est cependant pas spécialisée dans les réseaux de neurones convolutionnels, ce qui implique une grande quantité de mémoire et de redondances, lors de son implémentation. De plus, la précision synaptique des cœurs n'est pas suffisante, ce qui implique une distribution du calcul d'une couche de convolution sur plusieurs cœurs et donc une redondance de mémoire et de calculateur. En outre, cette solution ne virtualise pas le temps des impulsions, mais utilise le temps réel pour coder cette information. Cela implique l'utilisation de fréquences de fonctionnement basses (de l'ordre du KHz), ce qui rend ce type de solution naturellement incompatible avec des applications nécessitant un traitement rapide des données (classification de milliers d'images par seconde par exemple) et limite donc son champ d'utilisation. Une autre solution a été proposée dans T. Serrano-Gotarredona et al: "ConvNets experiments on SpiNNaker", 2015 IEEE International Symposium on Circuits and Systems (ISCAS), 1 mai 2015 (2015-05-01), pages 2405-2408, ISBN: 978-1-4799-8391-9 qui utilise une puce numérique appelée « SpiNNaker ».

Les implémentations matérielles de réseau convolutionnel impulsionnel existantes reposent toutes sur une unité de calcul classique et sont limitées par la taille du bus de données des mémoires numériques. Par ailleurs, elles nécessitent dans un premier temps une récupération de la valeur stockée dans la mémoire avant de pouvoir effectuer une opération sur celle-ci. Ainsi, par exemple, si la taille du bus mémoire est de 64 bits et que les coefficients sont stockés sur 8 bits, il n'est possible de récupérer à chaque coup d'horloge que 8 coefficients. Des millions de cycles d'horloge peuvent donc être nécessaires en fonction du nombre de coefficients dans le réseau. Le temps de traitement ainsi que la consommation énergétique requis pour calculer l'ensemble des sorties du réseau pour une donnée d'entrée sont donc très importants. Ces inconvénients constituent le goulot d'étranglement fondamental de ce type d'architecture (encore appelé Goulot d'étranglement de Von Neumann ou « Von Neumann bottleneck » en langue anglo-saxonne). Il est possible tout au plus de limiter un tel goulot d'étranglement (sans toutefois l'éliminer) par l'utilisation d'instructions de type SIMD (acronyme pour « Single Instruction on Multiple Data » signifiant littéralement « instruction unique sur des données multiples ») permettant le traitement de plusieurs données en une instruction processeur et par l'utilisation de mémoire distribuée avec plusieurs unités de calcul, comme dans les processeurs graphiques GPU ou comme dans l'architecture True North. Les architectures GPU ne sont cependant pas optimisées pour l'implémentation de réseaux impulsionnels tandis que la solution True North présente de faibles fréquences de fonctionnement limitative.

Il existe donc un besoin pour des calculateurs à base d'architecture de réseau de neurones convolutionnels à impulsions améliorés capables de satisfaire aux contraintes de surface, de consommation des systèmes embarqués sans dégrader les performances de classification.

## Définition générale de l'invention

L'invention vient améliorer la situation en proposant un calculateur pour calculer au moins une couche de convolution d'un réseau de neurones convolutionnel impulsionnel selon la revendication indépendante 1. Les revendications dépendantes définissent les modes de réalisation préférés de l'invention.

L'invention fournit ainsi un calculateur dédié aux réseaux de neurones convolutionnels à impulsions qui est optimal dans certaines configurations en taille mémoire utilisé pour les filtres et constant en temps de traitement quelle que soit la taille et le nombre de filtres de convolution (pour un nombre total maximal d'opérations donné).

L'invention fournit une solution compatible avec les contraintes des systèmes embarqués tant en matière de surface que de consommation, sans pour autant dégrader les performances de classification.

L'invention est en outre optimale en termes de quantité mémoire et de nombres de calculateurs.

Les modes de réalisation de l'invention sont en outre optimaux pour le traitement de couche de convolutions. Ils permettent notamment un parallélisme spatial complet tout en fournissant une grande précision synaptique avec un minimum de mémoire et de calculateurs.

## Brève description des dessins

D'autres caractéristiques et avantages de l'invention apparaîtront à l'aide de la description qui suit et des figures des dessins annexés dans lesquels:

- La figure 1 représente un exemple de réseau convolutionnel incluant des couches de regroupement (« pooling »), pour la classification d'images et des perceptrons;
- La figure 2 est un schéma montrant une couche de convolution constituée de plusieurs cartes de sortie ;
- La figure 3 illustre le principe de fonctionnement d'une couche de convolution dans un réseau de neurones convolutionnel ;
- La figure 4 est un schéma illustrant le codage impulsionnel et la propagation dans le réseau de neurones des impulsions ;
- La figure 5 représente schématiquement un calculateur pour calculer au moins une couche de convolution ;
- La figure 6 représente l'architecture d'un module de calcul, dans un mode de réalisation utilisant un réseau de neurones impulsionnel ;
- La figure 7 représente la distribution des coefficients de poids en fonction d'un événement en entrée
- La figure 8 représente la structure d'une unité de calcul, selon certains modes de réalisation.
- La figure 9 illustre un exemple de réalisation pour une convolution 3*3 sur une image 5*5 ;
- La figure 10 illustre la condition d'indépendance des neurones pour une convolution de dimension 3*3, selon un exemple de réalisation ;
- La figure 11 illustre la répartition des neurones et des adresses des valeurs d'intégration sur la matrice de sortie, selon un exemple de réalisation ;
- La figure 12 est un organigramme représentant les étapes mises en œuvre par chaque module de calcul, selon un mode de réalisation utilisant un réseau de neurones convolutionnel de type impulsionnel ;

- La figure 13 est un schéma montrant les entrées/sorties du pré-calculateur inclus dans chaque module de calcul, selon certains modes de réalisation ;
- La figure 14 représente un circuit combinatoire utilisé pour implémenter le pré-calculateur, selon un mode de réalisation ;
- La figure 15 est un schéma représentant les entrées/sorties de la fonction de calcul d'adresse d'intégration selon certains modes de réalisation.
- La figure 16 représente un circuit combinatoire utilisé pour implémenter la fonction de calcul d'adresse d'intégration implémentée dans chaque unité de calcul, selon certains modes de réalisation.
- La figure 17 est un schéma représentant les entrées/sorties de la fonction de sortie, selon certains modes de réalisation.
- La figure 18 représente un circuit combinatoire utilisé pour implémenter la fonction de sortie de chaque unité de calcul, selon un mode de réalisation ;
- La figure 19 représente les entrées/sorties de la fonction d'activation, selon un mode de réalisation ;
- La figure 20 un circuit combinatoire représentant une implémentation de la fonction d'activation, selon un exemple de réalisation ;
- La figure 21 est un schéma représentant un exemple d'implémentation de l'unité de logique de calcul de chaque unité de calcul, selon certains modes de réalisation ;
- La figure 22 illustre un exemple de réalisation de l'unité de gestion des sorties ;
- La figure 23 illustre un exemple un exemple d'implémentation du post-calculateur sous une forme combinatoire ; et
- La figure 24 est un organigramme représentant l'acheminement des données dans les différents composants du calculateur, selon des exemples de réalisation.

Les dessins pourront non seulement servir à mieux faire comprendre la description, mais aussi contribuer à la définition de l'invention, le cas échéant.

## Description détaillée

Pour faciliter la compréhension de la description de certains modes de réalisation, certaines caractéristiques et définitions des réseaux de neurones sont fournies ci-après.

Un réseau de neurones est constitué d'une ou plusieurs couches de convolution, incluant ou non des couches de regroupement (« pooling » en langue anglo-saxonne). Les couches peuvent être suivies par un classifieur type perceptron multicouches. La sortie d'une couche de convolution peut être connectée sur l'entrée de la couche suivante.

Dans une couche de convolution, chaque neurone est connecté à au moins une partie (sous-matrice) de la matrice d'entrée. Les sous-matrices ont la même taille pour une même couche et leur taille est égale à la taille du filtre. Elles peuvent être décalées les unes des autres de manière régulière et peuvent se chevaucher. La matrice d'entrée peut être de dimension quelconque. Cependant, la matrice d'entrée est généralement 2D avec des valeurs représentées en niveau de gris, la position d'un pixel donné étant fournie par les coordonnées XY. Pour une image en couleur, plusieurs niveaux de gris sont utilisés ainsi que plusieurs matrices d'entrée. Les cordonnées d'un pixel s'exprime alors en XYZ.

Dans un réseau de neurones, les neurones sont connectés à leur sous-matrice d'entrée $I$ par des synapses dont le poids est réglable. La matrice $K$ des poids synaptiques (les poids synaptiques sont encore appelés « coefficient de poids» ou «coefficients de convolution » ou « pondérations ») appliquée aux sous-matrices d'entrée des neurones est la même pour tous les neurones d'une même carte de sortie ("feature map" en langue anglo-saxone). Une telle matrice K est encore appelée « noyau de convolution ». Le fait que le noyau de convolution soit partagé pour l'ensemble des neurones d'une même carte de sortie O, et donc appliqué sur l'ensemble de la matrice d'entrée, diminue la mémoire nécessaire pour le stockage des coefficients, ce qui optimise les performances. Par exemple pour la reconnaissance d'images, cela permet de minimiser le nombre de filtres ou de représentations intermédiaires qui codent au mieux les caractéristiques de l'image et qui sont réutilisables sur toute l'image. Les coefficients d'un noyau de convolution K (c'est-à-dire les poids synaptiques) peuvent correspondre à des filtres classiques de traitement du signal (par exemple Gaussien, Gabor, Laplace...), ou être déterminés par apprentissage, supervisé ou non-supervisé, par exemple en utilisant l'algorithme de rétro-propagation du gradient. Les coefficients des noyaux de convolution peuvent être positifs ou négatifs et sont généralement normalisés entre -1 et 1, tout comme les valeurs d'entrée et de sortie des neurones.

Un neurone impulsionnel peut être défini par au moins deux fonctions :

- une fonction d'intégration qui intègre les valeurs en entrée du neurone et peut implémenter une fuite.
- Une fonction d'activation qui prend en paramètres les valeurs de l'intégration et fournit les valeurs de sortie du neurone. Une fonction d'activation est définie par une fonction algébrique non linéaire, paramétrée, à valeurs bornées, et ayant des variables réelles appelées « entrée » en fonction du modèle de neurone utilisé. Un neurone est en outre caractérisé par une fonction d'activation g() utilisée pour calculer la réponse d'un neurone (représentant la valeur interne du neurone) à un événement d'entrée, un seuil et des poids de connexion (encore appelés « poids synaptiques » ou « coefficients de convolution »).

Le modèle du neurone est défini par une fonction algébrique non linéaire. Cette fonction peut prendre en argument la valeur de l'intégration (représentant la valeur interne à un neurone) mais aussi, selon les modèles, le temps ou la sortie d'un compteur interne. Telle qu'utilisée ici, l'expression « intégration » désigne l'intégrale selon le temps des trains d'impulsions (« spike » en langue anglo-saxonne) pondérées en entrée du neurone (i.e. intégrale temporelle d'un train d'impulsions pondérées (peigne de Dirac par exemple)). Cette intégration peut être remise à zéro lorsque le neurone se déclenche (i.e. produit une impulsion en sortie).

Un neurone réalise dans un premier temps l'intégrale des impulsions pondérées (avec fuite selon le modèle). Les impulsions peuvent être unitaires de valeur 1 ou -1 (la valeur « -1 » n'est pas toujours utilisé). Les pondérations viennent du filtre. La valeur résultant de l'intégration est notée I : g(I). Classiquement, g peut prendre la forme d'une fonction sigmoïde, comme par exemple la fonction tangente hyperbolique.

Une couche de convolution peut contenir un ou plusieurs noyaux de convolution qui ont chacun une matrice d'entrée, qui peut être la même, mais qui ont des coefficients différents correspondant à des filtres différents.

Chaque noyau de convolution dans une couche produit une carte de sortie différente de sorte que les neurones de sortie sont différents pour chaque noyau. Les réseaux convolutionnels peuvent également inclure des couches de "pooling" locales ou globales qui combinent les sorties de groupe de neurones d'une ou plusieurs cartes de sortie. La combinaison des sorties peut consister par exemple à prendre la valeur maximale ou moyenne des sorties du groupe de neurones, pour la sortie correspondante, sur la carte de sortie de la couche de « pooling ». Les couches de « pooling » permettent de réduire la taille des cartes de sorties d'une couche à l'autre dans le réseau, tout en améliorant ses performances en le rendant plus tolérant à de petites déformations ou translations dans les données d'entrée.

Les réseaux convolutionnels peuvent également inclure des couches complètement connectés de type perceptron.

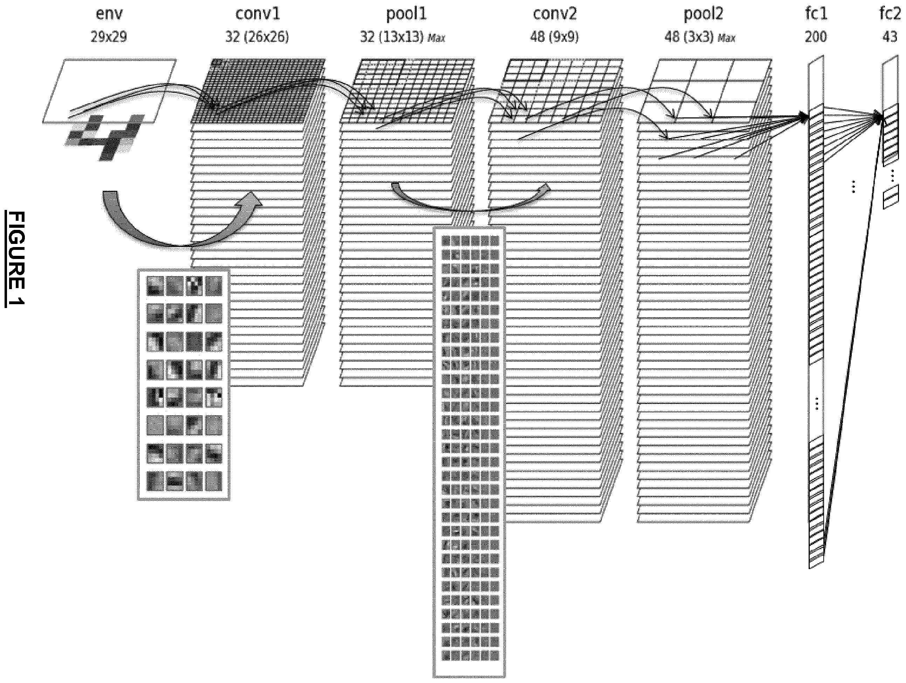

La Figure 1 représente un exemple de réseau convolutionnel incluant des couches de regroupement (« pooling »), pour la classification d'images. Les images en bas de la figure 1 représentent un extrait des noyaux de convolution de la première couche, après un apprentissage de type rétro-propagation du gradient, sur une base d'images telle que ImageNet.

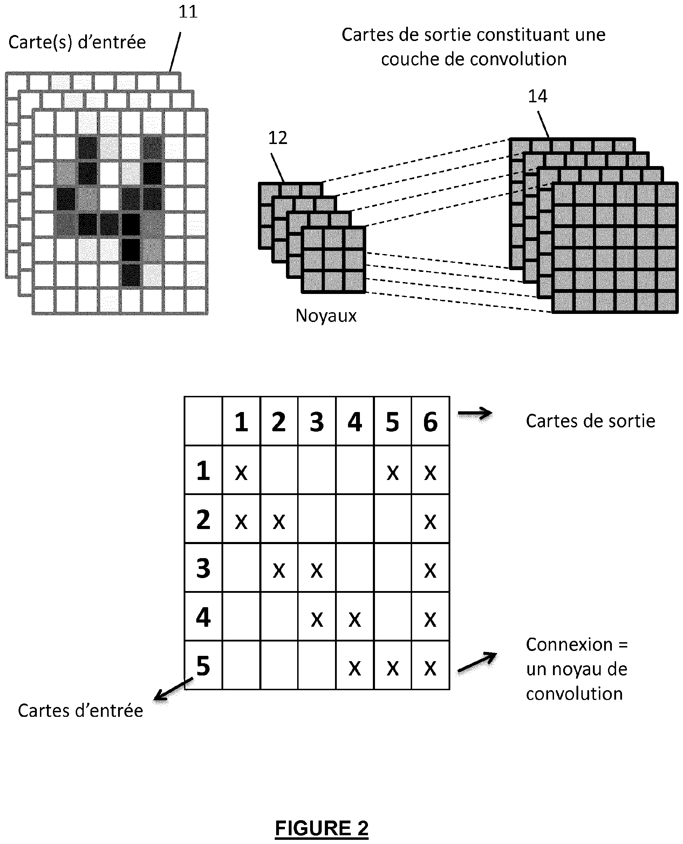

Comme illustré sur la figure 2, une couche de convolution ou de « pooling » peut être constituée d'une ou plusieurs matrices de sortie 14 (encore appelées « cartes de sortie » ou « output feature map » en langue anglo-saxonne), chaque carte de sortie pouvant être connectée à une ou plusieurs matrices d'entrée 11 (encore appelées « cartes d'entrée »).

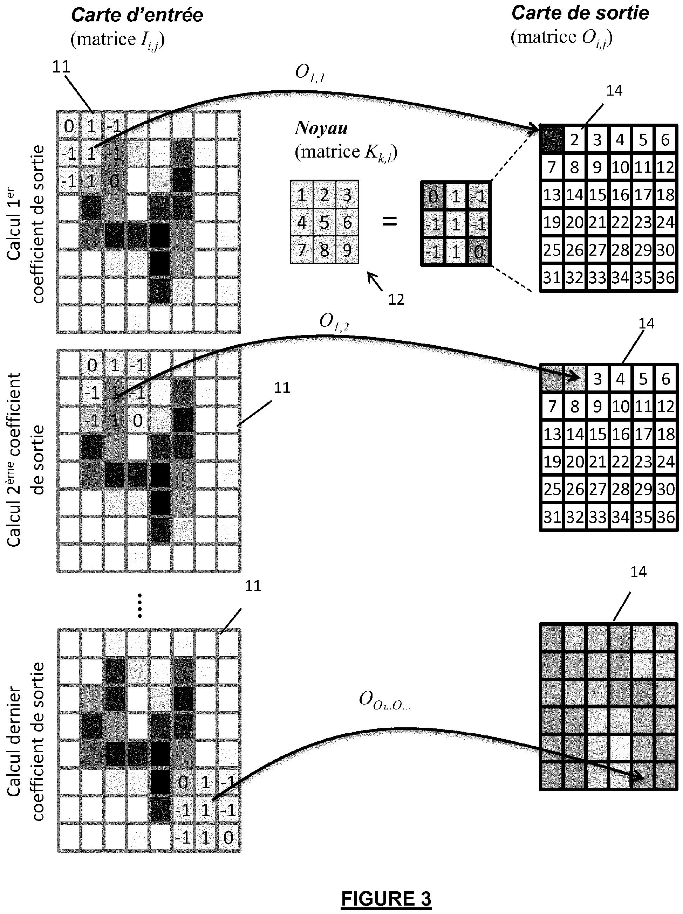

Comme illustré sur la figure 3, une matrice de sortie notée $O$ comprend des coefficients $O_{i,j}$, et a une taille notée $(O_h, O_w)$. Cette matrice correspond à une matrice de neurones et les coefficients $O_{i,j}$ correspondent aux valeurs de sortie de ces neurones, calculée à partir des entrées et des poids synaptiques.

Une matrice ou carte d'entrée 11 peut correspondre à une carte de sortie d'une couche précédente ou à une matrice d'entrée du réseau qui reçoit des stimuli ou une partie des stimuli à traiter. Un réseau peut être constitué d'une ou plusieurs matrices d'entrée 11. Il peut s'agir par exemple des composantes RGB, HSV, YUV ou de toute autre composante classique d'une image, avec une matrice par composante. Une matrice d'entrée notée $I$ comprend des coefficients $I_{i,j}$ et a une taille notée $(I_h, I_w)$.

Une carte de sortie $O$ peut être connectée à une matrice d'entrée $I$ par une opération de convolution, via un noyau de convolution 12 noté K (le noyau de convolution est encore appelé filtre, ou matrice de convolution), de taille $(n,m)$ et comprenant des coefficients $K_{k,l}$. Chaque neurone de la carte de sortie 14 est connecté à une partie de la matrice d'entrée 11, cette partie étant encore appelée « sous-matrice d'entrée » ou « champ récepteur du neurone » et étant de même taille que la matrice de convolution K. La matrice de convolution K comprenant les poids synaptiques est commune pour l'ensemble des neurones de la carte de sortie 0 (les poids de la matrice K sont alors dits « poids partagés »). Chaque coefficient de sortie de la matrice de sortie $O_{i,j}$ satisfait alors la formule suivante :

$$O_{i,j} = g\left( \sum_{k=0}^{\min(n-1,I_h-i.s_i)} \sum_{l=0}^{\min(m-1,I_w-j.s_j)} I_{i.s_i+k,j.s_j+l} \cdot K_{k,l} \right)$$

Dans la formule ci-dessus, $g()$ désigne la fonction d'activation du neurone, tandis que $s_i$ et $s_j$ désignent les paramètres de décalage (« stride » en langue anglo-saxonne) vertical et horizontal respectivement. Un tel décalage « stride » correspond au décalage entre chaque application du noyau de convolution sur la matrice d'entrée. Par exemple, si le décalage est supérieur ou égal à la taille du noyau, alors il n'y a pas de chevauchement entre chaque application du noyau.

Une carte de sortie $O$ est connectée à une matrice d'entrée $I$ par une opération de « pooling » qui réalise un sous-échantillonnage de la matrice d'entrée, ce qui fournit une matrice sous-échantillonnée. Le sous-échantillonnage peut être de deux types :

- Un type de sous-échantillonnage dit « MAX pooling » (regroupement maximal) selon l'équation ci-dessous:

$$O_{i,j} = g\left(max_{k=0}^{\min (n-1, I_h - i.s_i)} max_{l=0}^{\min (m-1, I_w - j.s_j)} I_{i.s_i+k,j.s_j+l}\right)$$

- Un type d'échantillonnage dit « AVERAGE pooling » (regroupement moyen) selon l'équation ci-dessous :

$$O_{i,j} = g\left(\frac{1}{n.m} \sum_{k=0}^{\min (n-1, I_h - i.s_i)} \sum_{l=0}^{\min (m-1, I_w - j.s_j)} I_{i.s_i+k,j.s_j+l}\right)$$

Les poids synaptiques associés aux connexions dans le cas d'une couche de « pooling » sont généralement unitaires et n'apparaissent donc pas dans les formules ci-dessus.

Une couche complètement connectée comprend un ensemble de neurones, chaque neurone étant connecté à toutes les entrées de la couche. Chaque neurone $O_j$ dispose de ses propres poids synaptiques $W_{i,j}$ avec les entrées $I_i$ correspondantes et effectue la somme pondérée des coefficients d'entrée avec les poids qui est ensuite passée à la fonction d'activation du neurone pour obtenir la sortie du neurone.

$$O_j = g\left(\sum_i I_i.W_{i,j}\right)$$

La fonction d'activation des neurones g() est généralement une fonction sigmoïde, comme par exemple la fonction *tanh*(). Pour les couches de « pooling », la fonction d'activation peut être par exemple la fonction Identité.

Les poids synaptiques peuvent être déterminés par apprentissage. L'apprentissage d'un réseau de neurones consiste à trouver les valeurs optimales des poids synaptiques à partir d'une méthode d'optimisation et d'une base d'apprentissage. Il existe de nombreuses méthodes d'apprentissage tels que la méthode de rétro-propagation du gradient, le principe de base consistant, à partir d'un stimulus en entrée du réseau, à calculer la sortie du réseau, la comparer à la sortie attendue (dans le cas d'un apprentissage dit supervisé) et rétro-propager un signal d'erreur dans le réseau, qui vient modifier les poids synaptiques par une méthode de descente du gradient.

Tel qu'utilisée ici, une couche de convolution peut donc être définie comme comprenant une ou plusieurs matrices de sortie 14 comprenant un ensemble de neurones de sortie, chaque matrice de sortie étant connectée à une matrice d'entrée (la matrice d'entrée comprenant un ensemble de neurones d'entrée) par des synapses artificielles associées à une matrice de convolution comprenant les coefficients de poids synaptiques correspondant aux neurones de sortie de la matrice de sortie, la valeur de sortie de chaque neurone de sortie étant déterminée à partir des neurones d'entrée de la matrice d'entrée auxquels le neurone de sortie est connecté et des coefficients de poids synaptiques de la matrice de convolution associée à la matrice de sortie.

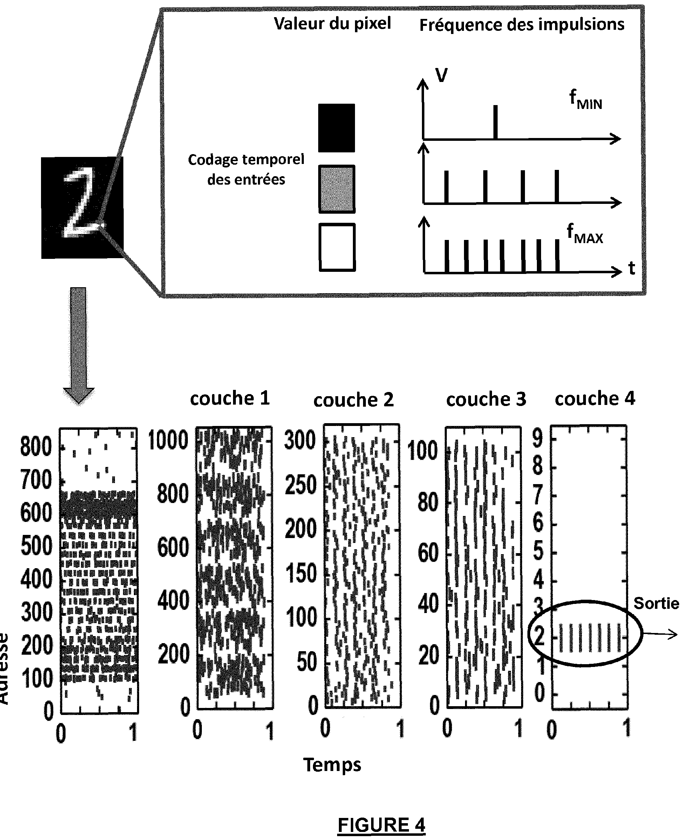

Les réseaux de neurones peuvent être transposés en codage impulsionnel comme illustré sur la figure 4. Dans ce cas, les signaux propagés en entrée et en sortie des couches du réseau ne sont plus des valeurs numériques, mais des impulsions électriques (assimilables à des impulsions Dirac). L'information qui était codée dans la valeur des signaux (normalisé entre -1 et 1) est alors codée temporellement avec l'ordre d'arrivée des impulsions (codage par rang, ou « rank order coding ») ou avec la fréquence des impulsions.

Dans le cas d'un codage par rang, l'instant d'arrivée de l'impulsion est inversement proportionnel à la valeur absolue du signal à coder. Le signe de l'impulsion détermine alors le signe de la valeur du signal à coder.

Dans le cas d'un codage fréquentielle, la fréquence des impulsions, comprise entre $f_{min}$ et $f_{max}$, est proportionnelle à la valeur absolue du signal à coder. Le signe de l'impulsion détermine le signe de la valeur du signal à coder. Par exemple, en considérant une matrice d'entrée du réseau correspondant à la composante de luminance d'une image, normalisée entre 0 et 1, un pixel (ou coefficient de la matrice) blanc, codé par une valeur 1, émettra des impulsions à une fréquence $f_{max}$, un pixel noir, codé par une valeur 0, émettra des impulsions à une fréquence $f_{min}$, tandis qu'un pixel gris, codé par une valeur $x$, émettra des impulsions à une fréquence $f = f_{min} + x(f_{max} - f_{min})$. Le codage peut également être pseudo-fréquentiel, par exemple poissonien : dans ce cas $f_{max}$ et $f_{min}$ représentent des fréquences moyennes uniquement. La phase initiale des impulsions peut être aléatoire.

Les impulsions peuvent également provenir directement d'un capteur, tel qu'une rétine ou une cochlée artificielle, imitant le fonctionnement de leur équivalent biologique.

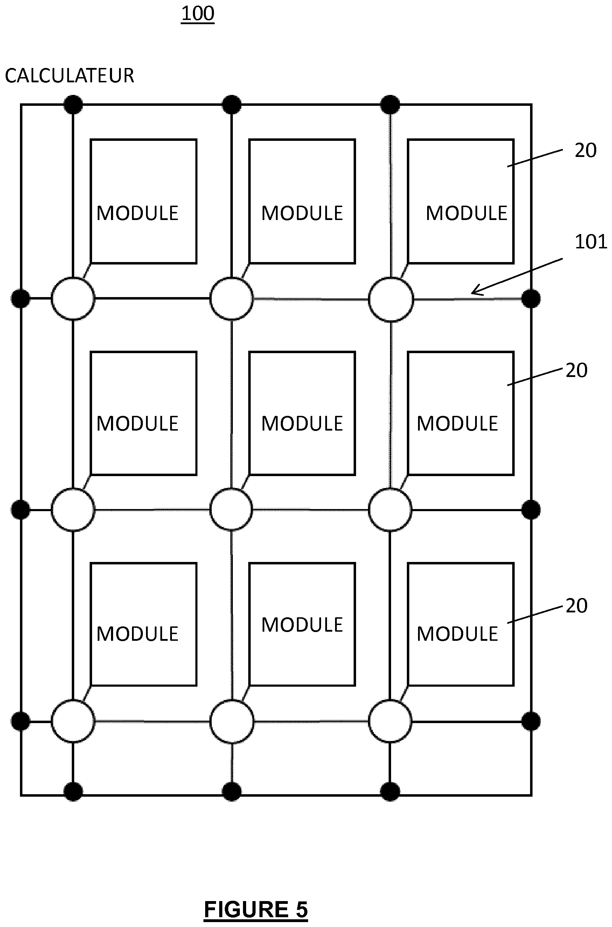

La figure 5 représente schématiquement un calculateur 100 configuré pour calculer au moins une couche de convolution (encore appelé « calcul neuromorphique ») d'un réseau de neurones convolutionnel comprenant au moins un noyau de convolution 12, le noyau comprenant des coefficients de poids, selon certains modes de réalisation.

Selon un aspect de l'invention, le calculateur comprend au moins un module de convolution 20 (encore appelé « bloc de convolution ») configuré pour calculer chaque couche de convolution, chaque couche de convolution étant constituée d'une ou plusieurs cartes de sortie.

Le calcul d'une couche de convolution consiste à calculer la valeur interne (encore appelée « valeur d'intégration ») des neurones qui ont reçu un événement d'entrée (tel qu'une impulsion). Lorsque cette valeur d'intégration dépasse un seuil prédéfini, les neurones sont « déclenchés » ou « activés » et émettent un évènement (impulsion) en sortie. Le calcul d'une couche de convolution consiste ainsi à déterminer la réponse des neurones de la couche de convolution à un événement d'entrée.

Les modules de calcul de convolution 20 peuvent être interconnectés par un système d'interconnexion 101. Dans un mode de réalisation, les modules de calcul de convolution 20 peuvent être interconnectés en utilisant un système de réseaux sur puce (NOC). Un réseau sur puce permet de rediriger les événements entre les modules et/ou les entrées/sorties. Le réseau assure la connexion entre les différentes couches du réseau de neurones 10. Dans certains modes de réalisation, le réseau sur puce peut implémenter en complément une fonction de gestion des priorités et de synchronisation des événements d'entrée.

La suite de la description sera faite en référence à un système d'interconnexion de type réseau sur puce à titre d'exemple non limitatif. L'homme du métier comprendra cependant aisément que d'autres systèmes d'interconnexion peuvent être utilisés tels que par exemple des systèmes d'interconnexions programmables (e.g. de type FPGA), des systèmes d'interconnexions à routage fixe, etc. Chaque module de calcul de convolution effectue une opération de convolution sur une ou une partie d'une couche du réseau.

Chaque module de convolution 20 peut être utilisé pour calculer une couche de convolution différente associée à un noyau de convolution (« filtre »). Cependant, chaque module de convolution 20 peut être utilisé pour réaliser plusieurs filtres dans une couche de convolution donnée. Dans certains modes de réalisation, lorsqu'un module de convolution 20 ne suffit pas pour calculer une couche de convolution donnée, plusieurs modules de convolution peuvent être utilisés pour calculer cette couche de convolution.

Chaque module de convolution 20 comprend un ensemble d'unités de calcul 200 (encore appelées « unité de calcul élémentaires »), tels que des processeurs ou des sous-calculateurs.

Pour l'événement d'entrée de la couche de convolution (définissant le point d'application du noyau de convolution 12), le module est configuré pour mettre en correspondance les coefficients du noyau de convolution 12 avec certaines au moins des unités de calculs 200 en parallèle, le nombre d'unités de calcul étant indépendant du nombre de neurones de la couche de convolution.

Pour chaque événement d'entrée, chaque unité de calcul 200 est associée à un coefficient de poids du noyau de convolution. En particulier, le nombre d'unités de calcul peut être au moins égal au nombre de coefficients du noyau de convolution (taille du noyau de convolution).

Chaque unité de calcul peut calculer la valeur d'un ensemble de neurones indépendants déclenchés par des événements d'entrée, en fonction du coefficient de poids associé à l'unité de calcul pour chaque événement d'entrée.

Dans un mode de réalisation de réseau de neurones à impulsions, l'événement d'entrée est représenté par une impulsion arrivant sur le réseau. Un réseau de neurones à impulsions peut recevoir dans le temps un train d'impulsions, chaque impulsion pouvant déclencher un ou plusieurs neurones.

L'événement d'entrée peut alors être défini par une adresse d'entrée sur la couche de convolution. La suite de la description sera faite en référence à un réseau de neurones convolutionnel à impulsions pour faciliter la compréhension de l'invention.

Telle qu'utilisée ici, « l'adresse d'entrée » d'une impulsion représente l'adresse de l'impulsion émise par la couche précédente (impulsions d'entrée) et reçue par la couche considérée. Dans le système, les impulsions peuvent être transmises par un bus série. Les impulsions propagent donc avec elles au moins leur adresse d'émission.

Lorsqu'une impulsion (définie par une adresse d'entrée) arrive sur une couche de convolution, la connexion entre les neurones de sortie et les neurones d'entrée sur la carte d'entrée fait que cette impulsion n'est pas reçue par tous les neurones de cette couche. Ainsi, pour une impulsion entrante donnée, il existe des neurones qui ne peuvent pas recevoir cette impulsion, en même temps. De tels neurones sont dits indépendants. De plus, le nombre de neurones recevant une même impulsion en même temps est au plus égal à la taille du filtre de convolution associé à la couche de convolution. Ces deux propriétés sont dues à la topologie des réseaux convolutionnels.

Selon une caractéristique de l'invention, pour effectuer le calcul de la réponse d'une couche de convolution donnée à une impulsion en entrée (événement d'entrée), au moins N unités de calcul élémentaires 200 peuvent être utilisées parallèlement et leurs fonctionnements peuvent êtres séquentielles (le nombre N représentant le nombre d'éléments dans le filtre de convolution maximal pouvant être traité), les unités de calcul étant associées à des neurones indépendants travaillant en parallèle.

Chaque module de calcul 200 forme ainsi un cœur de calcul. Chaque cœur de calcul peut être utilisé pour calculer une ou plusieurs opérations de convolutions sur une ou plusieurs parties d'une couche de convolution 4 du réseau de convolution 10 avec une complexité O(1), c'est-à-dire que le temps de calcul est indépendant des données à traiter (le calculateur est dit constant en temps).

Dans certaines applications de l'invention, le calculateur 100 peut être un calculateur multi-cœur à mémoires distribuées, chaque cœur pouvant être interconnecté par le système d'interconnexion 101.

Les différentes couches de convolution 4 du réseau de neurones convolutionnel 10 peuvent être distribuées sur les différents modules de calcul 20. En variante, les couches de convolution 4 peuvent être associées à un même module 20 en utilisant des décalages (« offsets ») en z et L et une boucle allant du module de convolution 20 vers lui-même.

Pour calculer la réponse des neurones déclenchés (valeur interne d'un neurone), chaque unité de calcul 200 utilise un modèle computationnel de neurones choisi. Le modèle du neurone peut être défini lors de la programmation du système. Dans certains modes de réalisation, il peut être identique pour tous les neurones d'une couche.

Une unité de calcul élémentaire donnée 200 peut être associée avantageusement à plusieurs neurones indépendants (i.e. un seul des neurones indépendants associé à une unité de calcul donné se déclenche pour une impulsion d'entrée donnée). Chaque unité de calcul de données élémentaire 200 est configurée pour générer une valeur de sortie représentant la valeur en sortie de chaque neurone indépendant qui lui est associé. La valeur de sortie résulte de l'intégration des valeurs d'entrée reçues par le neurone dans le temps pondérées chacune par un coefficient de poids du noyau de convolution. Cette intégration temporelle est déterminée en utilisant la fonction algébrique (encore appelée « fonction d'activation » ou « fonction de transition ») qui dépend du modèle computationnel de neurone.

Les éléments constituant la matrice d'entrée et les cartes de sortie du réseau de neurones peuvent être des nombres, entiers ou décimaux, à virgule fixe ou flottante. Dans un réseau de neurones peut être « impulsionnel », les valeurs d'entrée et de sortie étant codées avec des impulsions. Une valeur d'entrée ou de sortie peut ainsi être codée par le nombre d'impulsions durant une fenêtre de temps fixée (codage fréquentiel), ou par l'instant d'émission d'une impulsion selon une technique de codage d'ordre de rang. Dans les formes de réalisations de réseau de neurones impulsionnel avec codage fréquentiel, le calcul de la somme pondérée h se fait par accumulation du coefficient du noyau de convolution 14 à chaque arrivée d'une impulsion sur l'entrée correspondante. La fonction d'activation du neurone g peut dans ce cas être remplacée par un seuil. Lorsque la valeur absolue de $h$ dépasse le seuil suite à l'arrivée d'une impulsion sur la sous-matrice d'entrée, le neurone de sortie émet une impulsion du signe de $h$ et remet la somme pondérée $h$ à la valeur 0. Le neurone entre alors dans une période dite « réfractaire » durant laquelle il ne peut plus émettre d'impulsion durant une période fixée. Les impulsions peuvent par conséquent être positives ou négatives, selon le signe de $h$ au moment du dépassement du seuil. Une impulsion négative en entrée inverse le signe du coefficient du noyau correspondant pour l'accumulation.

Les modèles computationnels de neurones impulsionnels définissent le calcul de l'intégration temporelle de l'information. La réponse d'un neurone à une stimulation est le temps d'émission de la prochaine impulsion. Une impulsion est émise au moment où l'excitation du neurone dépasse le seuil. Une horloge virtuelle peut être utilisée pour temporiser les émissions d'impulsions sur les neurones, les impulsions pouvant alors être considérées comme des événements datés. Il existe plusieurs types de modèles de neurone impulsionnel comme par exemple :

- Le modèle de Hodgkin & Huxley (HH), qui est défini par quatre équations différentielles inter-dépendantes, qui décrit la dynamique temporelle du neurone par les variations de concentrations ioniques (K+, Ca2+) dans différents compartiments et reproduit les principaux "modes" de fonctionnement du neurone biologique.
- Le modèle Integrate & Fire (IF) qui est décrit par une équation différentielle unique et qui modélise le circuit intégré sous la forme d'un circuit électrique comprenant un condensateur et une résistance électrique (dipôle RC). Dans ce modèle, la dynamique du neurone est décrite par son potentiel de membrane et par l'intensité qui le traverse.
- Des modèles liés au modèle IF tels que le modèle Leaky Integrate & Fire (LIF) ou le modèle Quadratic Integrate&Fire (QIF), le modèle à conductance Integrate & Fire (gIF) ;
- Le modèle Spike Response Model (SRM) qui est basé sur le comportement du neurone (modélisation phénoménologique du neurone) ; ce modèle comprend une fonction noyau fournissant la dynamique du potentiel de membrane du neurone et une fonction calculant la sommation des potentiels post-synaptiques ;
- Le modèle d'Izhikevich (Izhikevich, 2003) qui utilise deux équations différentielles couplées pour modéliser les flux d'ions et les dynamiques de potentiel du neurone.

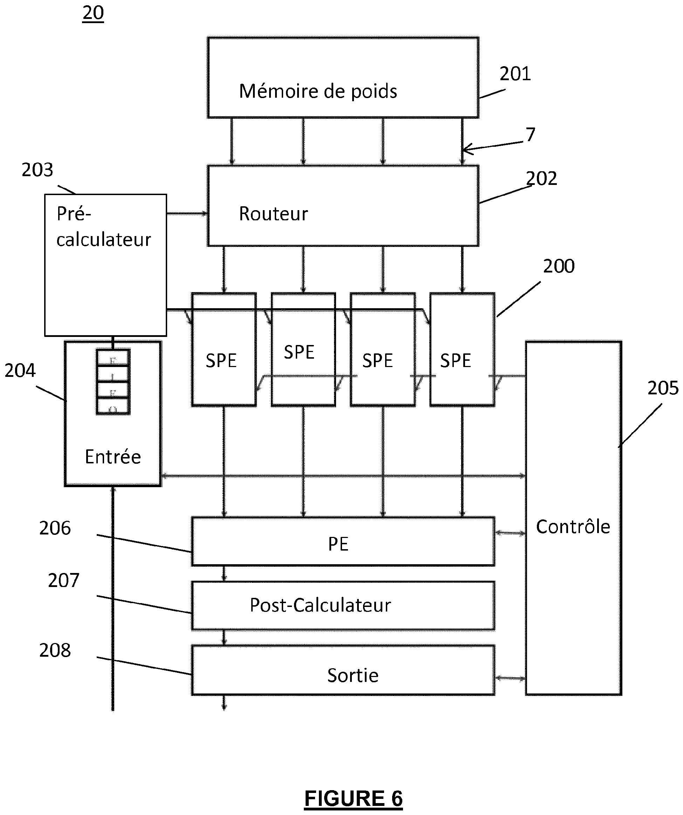

La figure 6 représente un exemple d'architecture d'un module de calcul 20, dans un mode de réalisation basé sur une architecture de réseau de neurones impulsionnel, comprenant 4 unités de calcul 200 à impulsion (« Spike Processing Element » en langue anglo-saxonne ou SPE) pour générer les événements de sortie en fonction d'un modèle de neurones.

Selon un aspect de l'invention, chaque module de convolution 20 comprend au moins une mémoire de coefficients de poids 201 pour stocker les coefficients de poids d'au moins un noyau de convolution, la mémoire de coefficients de poids étant accessible en parallèle par lesdites unités de calcul. La mémoire de coefficients de poids 201 peut être utilisée pour stocker des informations sur l'adresse de sortie, telle que « Zout », qui seront distribuées aux unités de calcul 200 dans la phase de calcul. Ces données ne passent pas par le routeur

Les unités de calcul 200 peuvent ainsi lire la mémoire 201 en parallèle. Cependant, dans certains modes de réalisation, une même donnée de la mémoire 201 ne peut pas être utilisée en même temps par les différentes unités de calcul. La mémoire 201 des coefficients de poids peut être modifiée lors de la programmation du système.

Chaque module de convolution 20 peut comprendre en outre une unité de routage 202 configurée pour distribuer les coefficients de poids de la mémoire 201 aux unités de calcul 200 au moyen d'un bus de données comprenant un ensemble de lignes portant les coefficients de poids.

Chaque module de convolution 20 est configuré pour calculer les adresses des coefficients de poids dans le bus de données 7 à affecter aux unités de calcul (200) en fonction de l'événement d'entrée et des données du réseau (qui peuvent être programmées au démarrage). Les coefficients de poids reçus sont alors utilisés par les unités de calcul 200 pour calculer les valeurs internes des neurones (valeur d'intégration). L'unité de routage utilise ces adresses de coefficients de poids $A_w$ pour distribuer les coefficients de poids de la mémoire 201 aux unités de calcul 200.

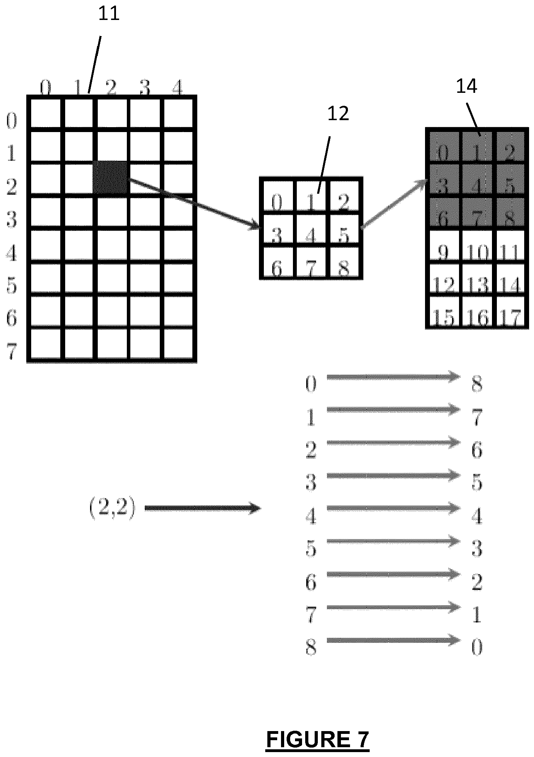

En réponse à l'émission d'un événement sous la forme d'une impulsion électrique encore appelée « potentiel d'action » (« spike » en langue anglo-saxonne) par un neurone d'entrée (neurone pré-synaptique), l'impulsion traverse les synapses, ce qui induit une impulsion sur un nombre fini de neurones post-synaptiques qui sont alors sollicités (ce nombre est égal au maximum au nombre d'éléments dans le filtre de la convolution), comme illustré sur la figure 7. Une telle propriété implique l'existence de neurones indépendants dans une couche du réseau de neurones 10 soumise à une impulsion (deux neurones sont dits indépendants si, pour un événement d'entrée donnée, ils ne peuvent pas se déclencher en même temps).

Chaque module de convolution 20 peut comprendre au moins une mémoire de valeurs de neurones 2002 pour stocker les valeurs internes (ou « valeurs d'intégration ») des neurones calculées par les unités de calcul 200. La ou les mémoires des valeurs d'intégration 2002 peuvent être agencées à l'extérieur des unités de calcul 200. En variante, chaque unité de calcul peut comprendre une mémoire de valeur d'intégration interne 2002 comme représenté dans l'exemple de la figure 6.

Selon un mode de réalisation, chaque module de convolution peut être configuré pour calculer, pour chaque événement d'entrée et pour chaque unité de calcul 200, une adresse possible de stockage des valeurs internes de neurones calculées par l'unité de calcul dans la mémoire de valeurs d'intégration 2002 à partir de l'événement d'entrée et d'au moins un paramètre de la couche de convolution à traiter.

Chaque unité de calcul 200 peut alors sélectionner cette adresse pour stocker les valeurs internes des neurones calculées par l'unité de calcul.

Selon certains modes de réalisation, chaque module de calcul 20 peut être configuré pour mutualiser certaines fonctions pour des groupes de neurones indépendants d'une même couche en utilisant notamment un pré-calculateur 203 pour effectuer les calculs de grandeurs utilisables en commun par les unités de calcul 200.

Dans certains modes de réalisation, le pré-calculateur peut mutualiser le calcul des adresses des coefficients de poids, dans le bus 7, à affecter aux unités de calcul 200 et/ou le calcul de l'adresse de stockage des valeurs internes des neurones dans la mémoire de valeurs d'intégration 2002.

Il en résulte une topologie des modules de calcul 20 qui permet de minimiser la surface du calculateur 100. Dans une couche de convolution donnée, les neurones partagent les mêmes coefficients de poids (valeurs du filtre de convolution). Dans chaque module de calcul 20, la mémoire des coefficients de poids 201 est distribuée parallèlement aux unités de calculs 200 (SPE) en fonction des événements d'entrées. Ainsi, la mémoire des coefficients de poids 201 n'est pas redondante. Une telle répartition de la mémoire permet d'optimiser l'espace mémoire.

Dans un mode de réalisation, chaque module de calcul 20 peut comprendre au minimum un nombre N d'unités de calcul 200 (SPE). Le nombre N étant d'unités de calcul 200 peut être le nombre maximal d'éléments de la convolution qui correspond au nombre de cellules mémoire. Par exemple, pour une convolution de taille maximale de 11x11, le nombre minimal d'unités de calcul 200 est égal à 121.

Chaque module de calcul 20 peut comprendre une fonction d'entrée 204 formant une unité de communication pour implémenter la logique de communication, comme par exemple le protocole AER, UART, ou RS232.

Chaque module de calcul 20 peut comprendre en outre :

- Une unité de gestion des sorties 206 (PE) configurée pour gérer la concurrence sur les événements de sortie des différentes unités de calcul élémentaires 200 ; et/ou
- Un Post-calculateur 207 configuré pour réaliser une convolution à pas variable (« stride » en langue anglo-saxone) ; et/ou
- Un Contrôleur 205 configuré pour contrôler le déroulement des tâches dans le module de calcul et notamment pour contrôler la concurrence sur un évènement de sortie.

Le post-calculateur 207 est configuré pour sélectionner les événements de sortie qui seront envoyés en sortie de l'unité de calcul 200 en fonction d'une ou plusieurs opérations sur l'événement de sortie.

Chaque module de calcul 20 peut notamment comprendre un système de communication d'entrée/sortie (204 et 208).

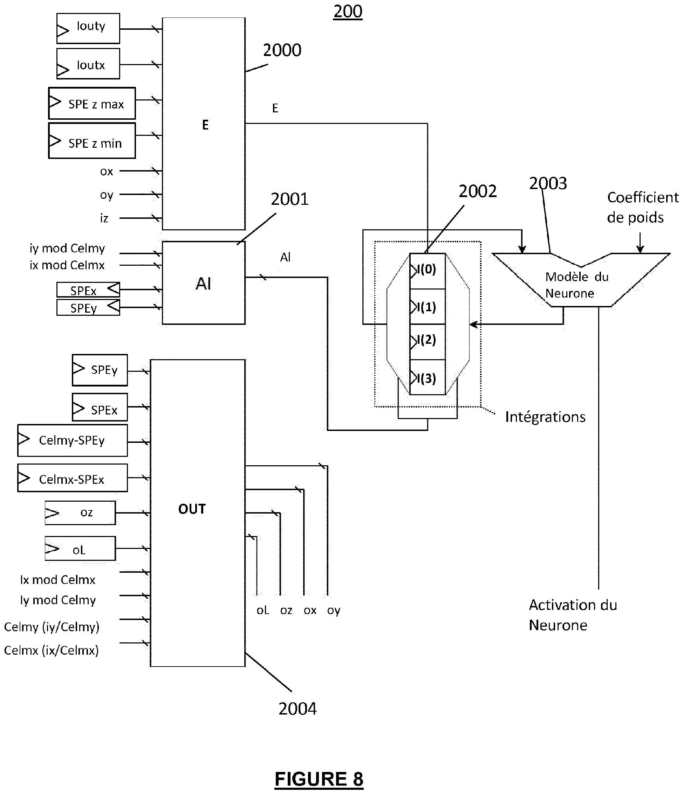

La figure 8 représente la structure d'une unité de calcul 200 selon certains modes de réalisation.

Les signaux propagés en entrée 2000 et en sortie 2004 des couches du réseau peuvent être des valeurs numériques (cas de réseau de neurones non-impulsionnel) notamment normalisées entre -1 et 1. En variante, dans les formes de réalisation utilisant un réseau de neurones impulsionnel comme représenté sur la figure 8, les signaux propagés en entrée 2000 et en sortie 2004 des couches du réseau peuvent être des impulsions électriques. L'information est ainsi codée temporellement selon l'ordre d'arrivée des impulsions ou la fréquence des impulsions.

Chaque unité de calcul 200 est associée à un ou plusieurs neurones indépendants qui partagent l'Unité Logique de calcul ALU 2003 (acronyme pour « Arithmetic Logic Unit ») du modèle de neurone configurée pour calculer l'activation de chaque neurone, une mémoire 2002 partagée par les neurones pour stocker la valeur d'intégration $I(i)$ calculée pour chaque neurone indépendant et une fonction de calcul d'adresse d'intégration 2001 configurée pour déterminer l'adresse de stockage des valeurs d'intégration dans la mémoire 2002. L'association entre les neurones du réseau et les unités de calcul 200 est effectuée au moyen d'un calcul d'adresse d'intégration et d'adresse de coefficient de poids.

Dans les formes de réalisation utilisant un réseau de neurones impulsionnel, comme dans l'exemple de la figure 8, chaque neurone $i$ dispose d'une place unique 2002 dans la mémoire interne pour stocker ses valeurs d'intégrations $I(i)$ (une valeur d'intégration ou valeur d'intégration temporelle $I(i)$ désigne l'intégration des impulsions provenant des mêmes entrées pondérées par les poids synaptiques dans le temps. Lorsque les impulsions sont identiques en valeur absolue (leur signe pouvant différer), leur intégrale peut être considérée comme unitaire ou normalisée. Dans l'exemple de la figure 8, l'unité de calcul 200 comprend 4 intégrations $I(1)$, $I(2)$, $I(3)$, $I(4)$.

La mémoire 2002 peut être partagée par des neurones indépendants. Elle peut donc être lue séquentiellement sans rompre le parallélisme spatial. Dans certains modes de réalisation, la mémoire 2002 peut-être externalisée et partagée entre plusieurs unités de calcul 200.

L'homme de métier notera que dans certains modes de réalisation, chaque module de convolution 20 peut comprendre au moins une mémoire de valeurs internes de neurones 2002 agencée(s) à l'extérieur des unités de calcul 200 pour stocker les valeurs internes des neurones calculées par les unités de calcul 200.

L'adresse de destination peut comporter trois composantes X, Y et Z selon le format de représentation choisi pour coder les impulsions. Par exemple, les impulsions transitant entre les couches du réseau de neurones 10 peuvent être codées au format AER (« Address-Event Représentation » signifiant représentation par événement d'adresse). Dans un tel format, chaque impulsion est numérique et est constituée d'un train de bits codant l'adresse (X, Y) de destination de l'impulsion suivant deux axes perpendiculaires X et Y, le repère (X, Y) correspondant au repère de la matrice d'entrée, ainsi que le signe de l'impulsion. Lorsqu'une impulsion arrive sur la matrice d'entrée, l'adresse (X, Y) codée représente l'emplacement du neurone d'entrée à activer. Ainsi, lorsqu'une impulsion arrive sur la matrice d'entrée, son adresse (X, Y) donne l'emplacement à activer $I_{i,j}$, avec X → j et Y → i.

Dans certains modes de réalisation, l'adresse peut comporter en outre des composantes Z et L (L désigne une composante de couche ou « Layers »). Dans de tels modes de réalisation, les composantes Z et L peuvent être utilisées pour créer des décalages (« offset ») en mémoire $I$ et $W$. La mémoire des pondérations comporte alors plusieurs lignes adressées par @ $W$. La composante $L$ peut aussi être utilisée pour changer dynamiquement la configuration d'un module.

En considérant un repère spatial bidimensionnel (X, Y), les définitions suivantes sont fournies :

- Le paramètre $C_{elmX}$ désigne le nombre d'éléments de la matrice de convolution selon l'axe X ;
- Le paramètre $C_{elmY}$ désigne le nombre d'éléments de la matrice de convolution selon l'axe Y ;
- Le paramètre $O_{elmX}$ désigne le nombre d'éléments de la carte de sortie selon l'axe X ;
- Le paramètre $O_{elmX}$ désigne le nombre d'éléments de la carte de sortie selon l'axe Y ;
- Le paramètre $I_{elmX}$ désigne le nombre d'éléments de la carte d'entrée I selon l'axe X ;
- Le paramètre $I_{elmY}$ désigne le nombre d'éléments de la carte d'entrée selon l'axe Y ;
- Le paramètre $i_x$ désigne la coordonnée de l'impulsion d'entrée selon l'axe X sur la carte d'entrée ;
- Le paramètre $i_y$ désigne la coordonnée de l'impulsion d'entrée, selon l'axe Y sur la carte d'entrée ;
- Le paramètre $o_x$ désigne la coordonnée de l'impulsion de sortie selon l'axe X sur la carte de sortie ;
- Le paramètre $O_{elmX}$ désigne le nombre d'éléments de la carte de sortie en X et est donné par : $O_{elmX} = K_x \times C_{elmX}$ ;
- Le paramètre $o_y$ désigne la coordonnée de l'impulsion de sortie selon l'axe Y sur la carte de sortie ;
- Le nombre $O_{elmY}$ désigne le nombre d'éléments de la carte de sortie en Y et est donné par : $O_{elmY} = K_y \times C_{elmY}$ ;
- $SPE_x$ désigne la coordonnée selon l'axe X d'une unité de calcul SPE (200);
- $SPE_y$ désigne la coordonnée selon l'axe Y d'une unité de calcul SPE (200);

- $s_x$ désigne une coordonnée intermédiaire entre $o_x$ et $SPE_x$ ;
- $s_y$ désigne une coordonnée intermédiaire entre $o_y$ et $SPE_y$ ;
- $A_I$ désigne l'adresse de l'intégration en fonction de $o_x$ et $o_y$ ;
- $A_w$ désigne l'adresse du coefficient de poids en fonction de $s_x$ et $s_y$ ;
- $SPE$ désigne l'adresse d'une unité de calcul SPE en fonction de $o_x$ et $o_y$ ;
- $OUT$ désigne l'adresse de l'impulsion en sortie en fonction de $o_x$ et $o_y$.

Il convient de noter que l'adresse d'une unité de calcul SPE en fonction de $o_x$ et $o_y$ satisfait :

$$SPE(o_x, o_y) = ((o_y \bmod C_{elmY}), (o_x \bmod C_{elmX})) \quad (1)$$

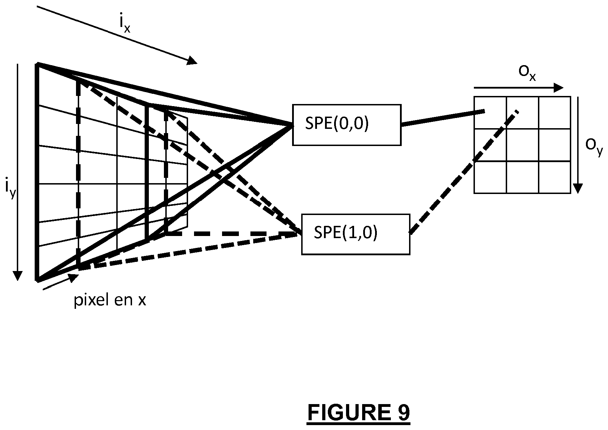

La figure 9 illustre un exemple de réalisation pour une convolution 3x3 sur une image 5x5, montrant les coordonnées d'entrée ($i_x$, $i_y$), et de sortie ($o_x$, $o_y$), ainsi que deux unité de calcul définie par leurs adresses respectives SPE(0,0) et SPE(1,0).

Sur la figure 9, l'unité de calcul définie par SPE(0,0) est associée à 2 neurones. De même, l'unité de calcul définie par SPE(1,0) est associée à 2 neurones.

L'ALU 2003 peut être configuré pour déterminer si la valeur absolue de l'intégration totale du neurone $g(h) = f(I(i))$ considérée est supérieure à une valeur de seuillage (encore appelée « seuil ») prédéfinie. Si la valeur absolue de l'intégration dépasse le seuil par la valeur de l'intégration du neurone (valeur interne d'un neurone impulsionnel), le neurone considéré est configuré pour émettre une impulsion en sortie 2004 qui sera propagée vers les neurones des couches suivantes connectés à ce neurone. Le signe de cette impulsion correspond au signe de l'intégration du neurone. Lorsque le neurone émet une impulsion, son intégration $I(i)$ est remise à 0 et le neurone entre dans une période dite « réfractaire », c'est-à-dire qu'il ne peut pas émettre de nouvelle impulsion en sortie, jusqu'à la fin de la période réfractaire. La période réfractaire peut être égale à la période minimale des impulsions se propageant dans le réseau.

La fonction d'adressage 2001 est configurée pour garantir que les coordonnées sur la carte de sortie des neurones d'une même unité de calcul 200 soient séparées d'une distance D égale au minimum de la taille de la convolution traitée en X et en Y. Par conséquent, les neurones d'une même unité de calcul ne peuvent pas se déclencher simultanément.

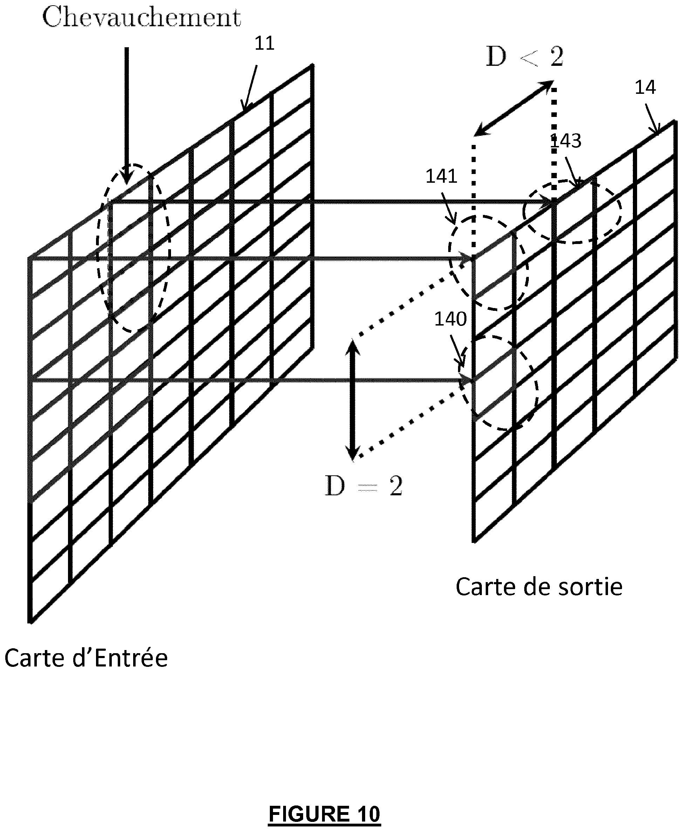

La figure 10 illustre la condition d'indépendance des neurones pour une convolution de dimension 3x3. Sur la figure 10, les 2 neurones 140 et 141 font partie d'une même unité de calcul 200 tandis que le neurone 143 se situe dans une unité de calcul différente.

Les neurones sont ainsi répartis dans les unités de calcul 200 en fonction de leur position sur la matrice de sortie 14 pour que chaque unité de calcul 200 ne contienne que des neurones indépendants. Ainsi les coordonnées des neurones contenus dans une unité de calcul 200 sont séparées sur la matrice de sortie au minimum d'une distance D égale à la taille de la convolution à traiter.

Une telle division de l'espace est représentée par l'équation ci-dessous :

$$SPE(o_x, o_y) = ((o_y \bmod C_{elmY}), (o_x \bmod C_{elmX})) \quad (1)$$

Dans l'équation (1), $SPE(o_x, o_y)$ désigne l'unité de calcul 200 associée au neurone de sortie de coordonnées de sortie ($o_x, o_y$).

Par ailleurs, selon certains modes de réalisation, le calculateur 100 peut être configuré pour éviter que les intégrations $I_i$ des neurones dans une même unité de calcul 200 ne soient confondues. Ainsi, le calculateur peut être configuré pour éviter que deux coordonnées différentes sur la matrice de sortie selon un axe considéré (X ou Y) correspondent à une même unité de calcul 200 et à une même intégration $I_i$. La fonction d'adressage 2001 notée $A_I$ est donc configurée pour satisfaire :

$$A_I(o_x, o_y) = (\left\lfloor \frac{o_y}{C_{elmY}} \right\rfloor, \left\lfloor \frac{o_x}{C_{elmX}} \right\rfloor)$$

Dans les équations utilisées dans la présente description, la notation $\lfloor A \rfloor$ désigne la partie entière de A.

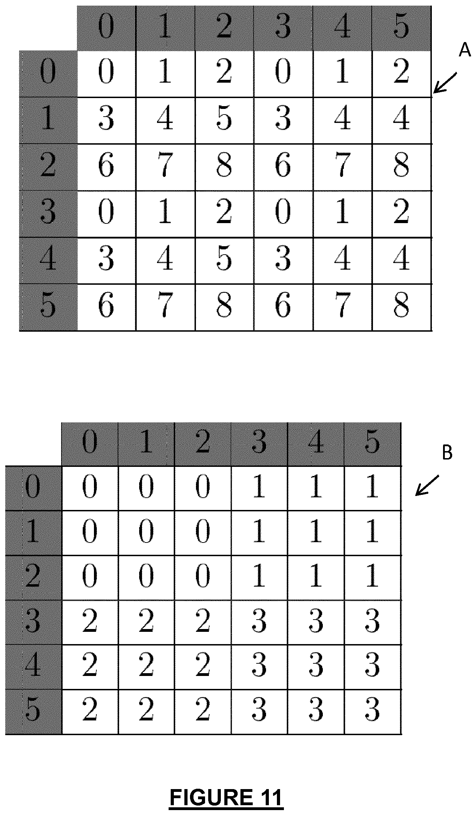

Sur la figure 11, le diagramme A illustre la répartition des neurones sur la matrice de sortie 14 (valeur de la fonction SPE()), selon un exemple de réalisation, pour :

- un nombre $C_{elmX}$ d'éléments de la matrice de convolution en X et un nombre $C_{elmY}$ d'éléments de la matrice de convolution en Y égaux à 3 ($C_{elmX} = C_{elmY} = 3$) ;
- un nombre $O_{elmX}$ d'éléments de la carte de sortie en X et un nombre $O_{elmY}$ d'éléments de la carte de sortie en Y égaux à 6 ($O_{elmX} = O_{elmY} = 6$).

Le diagramme B de la figure 11 illustre la répartition des valeurs des intégrations sur la matrice de sortie 14, selon un exemple de réalisation, pour les mêmes valeurs de paramètres $C_{elmX}$, $C_{elmY}$, $O_{elmX}$ et $O_{elmY}$ que la figure 10 ($C_{elmX} = C_{elmY} = 3$ et $O_{elmX} = O_{elmY} = 6$).

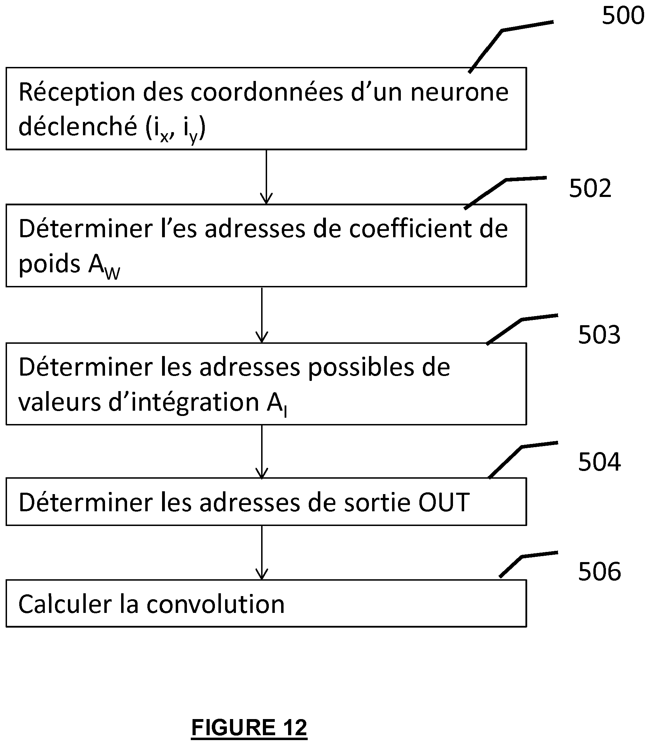

La figure 12 est un organigramme représentant les étapes mises en œuvre par chaque module de calcul pour calculer au moins une couche de convolution du réseau de neurones convolutionnel, selon un mode de réalisation utilisant un réseau de neurones impulsionnel.

Les relations entre les entrées et les sorties de la convolution comprennent :

$$\begin{cases} i_x - s_x = o_x \\ i_y - s_y = o_y \end{cases} \qquad (3)$$

$$\begin{cases} s_x = (i_x - SPE_x)\, mod\, C_{elmX} \\ s_y = (i_y - SPE_y)\, mod\, C_{elmY} \end{cases} \qquad (4)$$

$$A_w\left(s_y, s_x\right) = \left(s_y, s_x\right) \quad (5)$$

$$OUT\left(o_y, o_x\right) = \left(o_y, o_x\right) \quad (6)$$

A l'étape 500, les coordonnées $i_x$ et $i_y$ d'un neurone déclenché sur la carte d'entrée sont reçues.

Aux étapes 502, 503 et 504, les adresses de coefficient de poids $A_w$, les adresses possibles des valeurs d'intégrations $A_I$ et les adresses de sortie $OUT$ sont déterminées. Le procédé de calcul de couche de convolution s'appuie sur une reformulation des équations ci-dessus en fonction des unités de calcul SPE (200) et des coordonnées d'entrées $i_x$ et $i_y$ pour déterminer les adresses $A_w$, $A_I$ et $OUT$.

Les adresses des coefficients de poids $A_w$, déterminées à l'étape 502, représentent les adresses des coefficient de poids dans le bus de données 7, portant les coefficients de poids de la mémoire 201 en entrée de l'unité de routage 202, qui sont à affecter aux unités de calcul (200) en fonction de l'événement d'entrée, l'unité de routage 202 utilisant ces adresses de coefficients de poids $A_w$ pour distribuer les coefficients de poids de la mémoire 201 aux unités de calcul. Dans un mode de réalisation, les adresses de coefficients de poids peuvent être déterminées par le pré-calculateur 203 externe aux unités de calcul. Les adresses de coefficients de poids $A_w$ peuvent être déterminées à partir des coordonnées du neurone déclenché sur la carte d'entrée $i_x$ et $i_y$, et des paramètres de la couche de convolution (taille de la matrice de convolution et/ou taille de la matrice de sortie).

Les adresses possibles des valeurs d'intégration $A_I$, déterminées à l'étape 503, représentent un ensemble d'adresses possibles de stockage des valeurs internes de neurones calculées par l'unité de calcul dans la mémoire de valeurs de neurones 2002 à partir de l'événement d'entrée et d'au moins un paramètre de la couche de convolution à traiter (taille de la matrice de convolution et/ou taille de la matrice de sortie). Chaque unité de calcul 200 peut ensuite sélectionner une adresse parmi cet ensemble d'adresses possibles pour stocker les valeurs internes des neurones calculées par l'unité de calcul 200. En particulier, l'événement d'entrée étant défini par une adresse d'entrée ($i_x$, $i_y$) dans le repère choisi (X,Y) comprenant les coordonnées de l'événement d'entrée sur la carte d'entrée. Chaque unité de calcul étant par ailleurs associée à des coordonnées ($SPE_x$, $SPE_y$) dans le repère qui correspondent aux coordonnées du coefficient de poids associé à la matrice de convolution dans ce même repère, chaque unité de calcul (200) peut sélectionner une adresse parmi l'ensemble d'adresses possibles en fonction des coordonnées de l'unité de calcul ($SPE_x$, $SPE_y$) dans le repère.

Les adresses possibles des valeurs d'intégration $A_I$ peuvent être déterminées à l'étape 503 par le pré-calculateur 203 qui est externe aux unités de calcul 200.

A l'étape 504, l'adresse de sortie $OUT$ représente l'adresse de sortie sur la carte de sortie 14 des neurones déclenchés. Elle peut être déterminée par une unité de sortie 2004 prévue dans chaque unité de calcul configurée. L'adresse de sortie $OUT$ peut alors être communiquée aux autres modules de calcul 20 du calculateur.

A l'étape 506, la convolution est calculée pour le neurone d'entrée considéré par les unités de traitement. Chaque unité de calcul 200 peut calculer la valeur interne de chaque neurone déclenché par l'événement d'entrée en utilisant les coefficients des poids distribués par l'unité de routage 202 en fonction des adresses de coefficients de poids

$A_w$. La valeur interne calculée par chaque unité de calcul 200 est stockée dans l'adresse de valeur d'intégration sélectionnée par l'unité de calcul à partir de l'ensemble d'adresse de valeur d'intégration possible $A_I$. Dans chaque unité de calcul 200, l'unité logique de calcul 2003 peut alors calculer la valeur de sortie d'un neurone en appliquant la fonction associée au modèle computationnel de neurone.

Dans un réseau de neurones convolutionnel à impulsions où les valeurs d'entrée et les valeurs de sortie de chaque neurone sont codées par des impulsions, la valeur interne d'un neurone calculée par chaque unité de calcul est l'intégrale temporelle des valeurs d'entrées reçues par le neurone, chaque valeur d'entrée étant pondérée par le coefficient de poids associé à l'unité de calcul pour chaque valeur d'entrée du neurone.

Dans un mode de réalisation, l'étape de détermination de l'adresse de coefficient de poids $A_W$ (étape 502 de la figure 12) peut être mise en œuvre comme détaillé si après.

Lorsqu'une impulsion est reçue par le calculateur, l'adresse du coefficient de poids $A_W$ que doit lire chaque unité de calcul 200 est déterminée. Elle représente l'adresse du coefficient de poids dans le bus de données 7. L'adresse de coefficient de poids ainsi déterminée pourra être utilisée par l'unité de routage 202 pour distribuer le coefficient de poids applicable à chaque unité de calcul 200. Le coefficient de poids reçu par chaque unité de calcul 200 sera utilisé par l'unité de calcul pour mettre à jour la valeur interne des neurones.

Pour chaque unité de calcul SPE (200), l'adresse de coefficient de poids $A_W$ peut être déterminée en fonction des coordonnées de l'unité de calcul dans le repère choisi ($SPE_x$; $SPE_y$) et en fonction des coordonnées du neurone d'entrée sur la carte d'entrée ($i_x$; $i_y$).

Dans un mode de réalisation, des coordonnées intermédiaires $s_x$ (respectivement $s_y$) entre la coordonnée correspondante de sortie $o_x$ sur la carte de sortie (respectivement $o_y$) et la coordonnée correspondante de l'unité de calcul $SPE_x$ (respectivement $SPE_y$) peuvent être tout d'abord déterminés en fonction des coordonnées ($SPE_x$; $SPE_y$) de l'unité de calcul dans le repère choisi, des coordonnées du neurone d'entrée sur la carte d'entrée ($i_x$; $i_y$), et du nombre d'éléments $C_{elmX}$ (respectivement $C_{elmY}$) de la matrice de convolution selon l'axe correspondant X (respectivement Y). Les coordonnées intermédiaires peuvent notamment être déterminées selon les équations suivantes dérivées de l'équation (4) :

$$\begin{cases} s_x = (i_x - SPE_x) - C_{elmX} \left\lfloor \dfrac{i_x - SPE_x}{C_{elmX}} \right\rfloor \\ s_y = (i_y - SPE_y) - C_{elmY} \left\lfloor \dfrac{i_y - SPE_y}{C_{elmY}} \right\rfloor \end{cases} \quad (7)$$

Les coordonnées ($SPE_x$; $SPE_y$) des unités de calcul 200 selon le repère choisi peuvent être prédéfinies avant le démarrage du calculateur 100 ou peuvent être modifiées dynamiquement pendant le fonctionnement du calculateur. L'équation (7) peut être réécrite sous la forme :

$$\begin{cases} s_x = (i_x - SPE_x) - C_{elmX} \left\lfloor \dfrac{i_x}{C_{elmX}} - \dfrac{SPE_x}{C_{elmX}} \right\rfloor \\ s_y = (i_y - SPE_y) - C_{elmY} \left\lfloor \dfrac{i_y}{C_{elmY}} - \dfrac{SPE_y}{C_{elmY}} \right\rfloor \end{cases} \quad (8)$$

D'après la définition de la partie fractionnelle d'un élément, il vient:

$$\left\lfloor \frac{i_x}{C_{elmX}} - \frac{SPE_x}{C_{elmX}} \right\rfloor = \begin{cases} \left\lfloor \dfrac{i_x}{C_{elmX}} \right\rfloor \ si \ \left\{\dfrac{i_x}{C_{elmX}}\right\} \geq \left\{\dfrac{SPE_x}{C_{elmX}}\right\} \\ \left\lfloor \dfrac{i_x}{C_{elmX}} \right\rfloor - 1 \ si \ \left\{\dfrac{i_x}{C_{elmX}}\right\} < \left\{\dfrac{SPE_x}{C_{elmX}}\right\} \end{cases} \quad (9.1)$$

$$\left\lfloor \frac{i_y}{C_{elmY}} - \frac{SPE_y}{C_{elmY}} \right\rfloor = \begin{cases} \left\lfloor \dfrac{i_y}{C_{elmY}} \right\rfloor \ si \ \left\{\dfrac{i_y}{C_{elmY}}\right\} \geq \left\{\dfrac{SPE_y}{C_{elmY}}\right\} \\ \left\lfloor \dfrac{i_y}{C_{elmY}} \right\rfloor - 1 \ si \ \left\{\dfrac{i_y}{C_{elmY}}\right\} < \left\{\dfrac{SPE_y}{C_{elmY}}\right\} \end{cases} \quad (9.2)$$

Dans les équations 9.1 et 9.2, la notation $\{A\}$, désigne la valeur absolue de A.

Par ailleurs, comme $\dfrac{i_x}{C_{elmX}}$ satisfait :

$$\frac{i_x}{C_{elmX}} \geq \left\{\frac{SPE_x}{C_{elmX}}\right\} = i_x \bmod C_{elmX} \geq SPE_x \quad (10)$$

L'adresse du coefficient de poids $A_w$ que doit lire une unité de calcul donnée SPE de coordonnées $(SPE_x, SPE_Y)$ sur le bus de sortie de l'unité de routage 202 peut être déterminée en fonction de $(SPE_x, SPE_Y)$ et $(i_x, i_Y)$ selon les équations suivantes à l'étape 602 :

$$A_W = W_x + C_{elmX}W_y$$

$$W_x = \begin{cases} i_x \bmod C_{elmX} - SPE_x & si\ i_x \bmod C_{elmX} \geq SPE_x \\ i_x \bmod C_{elmX} - SPE_x + C_{elmX} & si\ i_x \bmod C_{elmX} < SPE_x \end{cases} \quad (11)$$

$$W_y = \begin{cases} i_y \bmod C_{elmY} - SPE_y & si\ i_y \bmod C_{elmY} \geq SPE_y \\ i_y \bmod C_{elmY} - SPE_y + C_{elmY} & si\ i_y \bmod C_{elmY} < SPE_y \end{cases}$$

Il convient de noter que le calcul de l'adresse de coefficient de poids $A_w$ pour chaque unité de calcul utilise une même valeur des termes $i_x \bmod C_{elmX}$ et $i_y \bmod C_{elmY}$, quelle que soit l'unité de calcul (i.e. ces termes ne dépendent pas de l'unité de calcul).

Lors de l'arrivée d'un événement sur la matrice d'entrée 11, le calculateur 100 est configuré pour transmettre à chaque unité de calcul SPE (200) un coefficient de poids défini par l'adresse $A_w$ dans le bus de données 7 et pour associer ce coefficient de poids à un neurone (coefficient du noyau de convolution 14) et donc à une valeur d'intégration (valeur d'intégration des impulsions provenant des mêmes entrées pondérées par les coefficients de poids associées aux impulsions). La valeur d'intégration associée à un coefficient de poids d'adresse $A_w$ est définie par une adresse d'intégration $A_l$ qui est déterminée à l'étape 502 de la figure 12.

Le bloc de calcul de l'adresse de coefficient de poids dans chaque module de convolution 20 peut être implémenté sous la forme d'un circuit combinatoire comprenant des blocs additionneurs et des blocs comparateurs pour mettre en œuvre les équations 11. Dans un mode de réalisation, ce bloc de calculateur peut faire partie du pré-calculateur 203.

Pour chaque adresse de coefficient de poids $A_w$, l'adresse d'intégration $A_l$ correspondante peut être déterminée en fonction des coordonnées $(SPE_x\ ; SPE_y)$ de l'unité de calcul dans le repère choisi et en fonction des coordonnées $(i_x\ ; i_y)$ du neurone d'entrée sur la carte d'entrée 11.

Pour cela, les coordonnées correspondante de sortie $o_x$ et $o_y$ selon le repère (X, Y) sur la carte de sortie peuvent être déterminées en fonction des coordonnées de l'unité de calcul $SPE_x$ et $SPE_y$ respectivement selon l'axe X et l'axe Y en utilisant l'équation suivante dérivée des équations (3) et (4) :

$$\begin{cases} o_x = SPE_x + C_{elmX}\left\lfloor\dfrac{i_x - SPE_x}{C_{elmX}}\right\rfloor \\ o_y = SPE_y + C_{elmY}\left\lfloor\dfrac{i_y - SPE_y}{C_{elmY}}\right\rfloor \end{cases} \quad (12)$$

L'équation (12) peut être réécrite sous la forme :

$$o_x = \begin{cases} SPE_x + C_{elmX}\left\lfloor\dfrac{i_x}{C_{elmX}}\right\rfloor & si\ i_x \bmod C_{elmX} \geq SPE_x \\ SPE_x + C_{elmY}\left(\left\lfloor\dfrac{i_x}{C_{elmX}}\right\rfloor - 1\right) & si\ i_x \bmod C_{elmX} < SPE_x \end{cases} \quad (13.1)$$

et,

$$o_y = \begin{cases} SPE_y + C_{elmY} \left\lfloor \dfrac{i_y}{C_{elmY}} \right\rfloor & si \ i_y \ mod C_{elmY} \geq SPE_y \\[3mm] SPE_y + C_{elmY} \left( \left\lfloor \dfrac{i_y}{C_{elmY}} \right\rfloor - 1 \right) & si \ i_y \ mod C_{elmY} < SPE_y \end{cases} \quad (13.2)$$

Pour déterminer l'adresse d'intégration $A_I$ en fonction des coordonnées de sortie $o_x$ et $o_y$, le calculateur détermine $\left\lfloor \dfrac{o_x}{C_{elmX}} \right\rfloor$ :

$$\left\lfloor \frac{o_x}{C_{elmX}} \right\rfloor = \begin{cases} \left\lfloor \dfrac{i_x}{C_{elmX}} \right\rfloor & si \ si \ i_x \ mod \ C_{elmX} \geq SPE_x \\[3mm] \left\lfloor \dfrac{i_x}{C_{elmX}} \right\rfloor - 1 & sinon \end{cases}$$

L'adresse d'intégration $A_I$ peut être alors définie par les 3 équations suivantes :

$$A_I = I_x + \left\lfloor \frac{O_{elmx}}{C_{elmX}} \right\rfloor I_y \qquad (15.1)$$

$$I_x = \begin{cases} \left\lfloor \dfrac{i_x}{C_{elmX}} \right\rfloor & si \ i_x \ mod \ C_{elmX} \geq SPE_x \\[3mm] I_x = \left\lfloor \dfrac{i_x}{C_{elmX}} \right\rfloor - 1 & si \ i_x \ mod \ C_{elmX} < SPE_x \end{cases} \quad (15.2)$$

$$I_y = \begin{cases} \left\lfloor \dfrac{i_y}{C_{elmY}} \right\rfloor & si \ y \ mod \ C_{elmY} \geq SPE_y \\[3mm] I_y = \left\lfloor \dfrac{i_y}{C_{elmY}} \right\rfloor - 1 \ si \ i_y \ mod \ C_{elmY} < SPE_y \end{cases} \quad (15.3)$$

Ainsi, il existe un nombre fini de possibilités d'adresse d'intégration $A_I$ (4 possibilités dans le mode de réalisation précédent). Dans un mode de réalisation, le calculateur 100 peut calculer les adresses d'intégration possibles pour toutes les unités de calcul (200) en utilisant une fonction de calcul d'adresse d'intégration. Chaque unité de calcul SPE (200) peut alors être configurée pour sélectionner la valeur d'adresse d'intégration adaptée à l'adresse de coefficient de poids $A_w$ parmi les valeurs disponibles.

La valeur des adresses de sorties *OUT* est différente pour chaque unité de calcul. Pour chaque adresse de coefficient de poids $A_w$, l'adresse de sortie *OUT* définie par les coordonnées de sortie $o_x$ et $o_y$ peut être déterminée à l'étape 503 de la figure 12 à partir des équations (13.1) et (13.2), d'après la formulation suivante :

$$o_x = \begin{cases} SPE_x + C_{elmX} \left\lfloor \dfrac{i_x}{C_{elmX}} \right\rfloor & si \ i_x \ mod C_{elmX} \geq SPE_x \\[3mm] SPE_x + C_{elmY} \left\lfloor \dfrac{i_x}{C_{elmX}} \right\rfloor - C_{elmX} & si \ i_x \ mod C_{elmX} < SPE_x \end{cases} \quad (16)$$

et,

$$o_y = \begin{cases} SPE_y + C_{elmY} \left\lfloor \dfrac{i_y}{C_{elmY}} \right\rfloor & si \ i_y \ mod C_{elmY} \geq SPE_y \\[3mm] SPE_y + C_{elmY} \left\lfloor \dfrac{i_y}{C_{elmY}} \right\rfloor - C_{elmY} & si \ i_y \ mod C_{elmY} < SPE_y \end{cases} \quad (17)$$

Les termes $C_{elmX} \left\lfloor \frac{i_x}{C_{elmX}} \right\rfloor C_{elmX}$ et $C_{elmX} \left\lfloor \frac{i_y}{C_{elmY}} \right\rfloor C_{elmX}$ sont communs à toutes les unités de calcul 200 et peuvent donc être calculés par une unité de calcul du calculateur commune à toutes les unités de calcul.

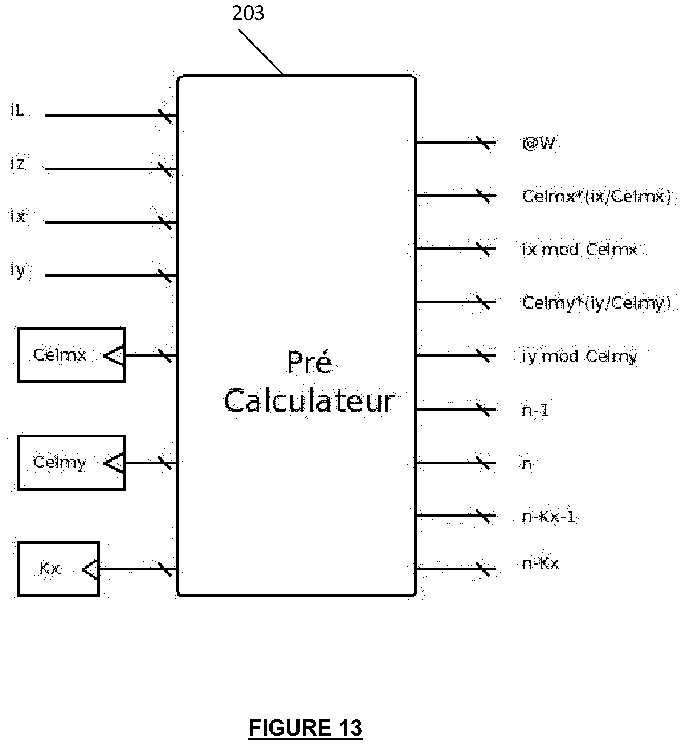

La figure 13 est un schéma montrant les entrées/sorties du pré-calculateur 203 inclus dans chaque module de calcul 20, selon certains modes de réalisation.

Le pré-calculateur 203 mutualise pour toutes les unités de calcul une partie des opérations à effectuer sur les coordonnées d'un neurone sur la carte d'entrée ($i_x$ et $i_y$ dans le repère (X,Y).

Le pré-calculateur détermine un ensemble de quantités pouvant être distribuées parallèlement à toutes les unités de calcul SPE (200), et utilisées par chaque unité de calcul pour le calcul de certains paramètres tels que le calcul de l'adresse d'intégration $A_I$, de l'adresse de sortie $OUT$.

Dans certains modes de réalisation, le pré-calculateur 203 reçoit en entrée :

- les coordonnées d'entrée $i_x$ et $i_y$ sur la carte d'entrée 11 ;
- Le nombre d'éléments $C_{elmX}$ de la matrice de convolution selon l'axe X et le nombre d'éléments $C_{elmY}$ de la matrice de convolution selon l'axe Y.

Le pré-calculateur 203 peut recevoir en entrée également le coefficient $K_x$.

Les quantités calculées par le pré-calculateur et pouvant être utilisées en parallèle pour les unités de calcul, notamment pour le calcul de l'adresse de coefficient de poids $A_w$, de l'adresse d'intégration $A_I$, de l'adresse de sortie $OUT$ peuvent comprendre les 8 sorties suivantes :

1. $i_x \bmod C_{elmX}$
2. $i_y \bmod C_{elmY}$
3.

$$C_{elmX} * \left\lfloor \frac{i_x}{C_{elmX}} \right\rfloor$$

4.

$$C_{elmY} * \left\lfloor \frac{i_y}{C_{elmY}} \right\rfloor$$

5.

$$n = K_x \left\lfloor \frac{i_y}{C_{elmY}} \right\rfloor + \left\lfloor \frac{i_x}{C_{elmX}} \right\rfloor = \left\lfloor \frac{i_y}{C_{elmY}} \right\rfloor \left\lfloor \frac{l_{elmX}}{C_{elmX}} \right\rfloor + \left\lfloor \frac{i_x}{C_{elmX}} \right\rfloor$$

6. $n$ - 1
7. $n$ - $K_x$
8. $n$ - $K_{x-1}$

Les calculs effectués par le pré-calculateur peuvent être réalisés en parallèle sans changer les propriétés du module de calcul (par exemple, parallélisme spatial et/ou temps de traitement constant).

Dans un mode de réalisation, le pré-calculateur 203 peut être implémenté sous la forme d'un circuit combinatoire.

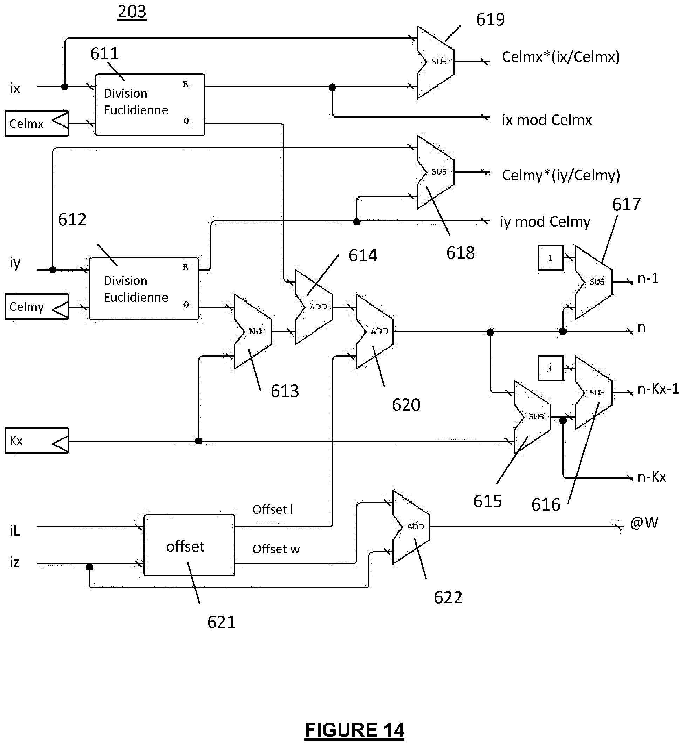

La figure 14 est un circuit combinatoire utilisé pour implémenter le pré-calculateur 203, selon un mode de réalisation dans lequel les calculs ne sont pas « pipelinés ».

Dans ce mode de réalisation, le pré-calculateur 203 comprend deux blocs de division euclidienne 611 et 612 :

- le bloc de division euclidienne 611 est configuré pour effectuer la division euclidienne de $i_x$ par $C_{elmX}$, ce qui fournit le résultat $R_X = i_x \bmod C_{elmX}$ (sortie 1) et le quotient

$$Q_X = \left\lfloor \frac{i_x}{C_{elmX}} \right\rfloor$$

- le bloc de division euclidienne 612 est configuré pour effectuer la division euclidienne de $i_y$ par $C_{elmY}$, ce qui fournit le résultat $R_Y = i_y \bmod C_{elmY}$ (sortie 2) et le quotient

$$Q_Y = \left\lfloor \frac{i_y}{C_{elmY}} \right\rfloor$$

Le pré-calculateur 203 peut en outre comprendre un ensemble de blocs logiques comprenant :

- un bloc multiplicateur 613 pour effectuer la multiplication de $K_x$ par $Q_Y = \left\lfloor \frac{i_y}{C_{elmY}} \right\rfloor$, ce qui fournit $k_x \left\lfloor \frac{i_y}{C_{elmY}} \right\rfloor$,

- un bloc additionneur 614 pour ajouter le résultat du bloc 614, $K_x \left\lfloor \frac{i_y}{C_{elmY}} \right\rfloor$, à $Q_X$ ; le bloc 64 fournit ainsi le résultat

$$n = K_x \left\lfloor \frac{i_y}{C_{elmY}} \right\rfloor + \left\lfloor \frac{i_x}{C_{elmX}} \right\rfloor \quad \text{(sortie 5)};$$

- un bloc soustracteur 615 pour soustraire $K_x$ au résultat du bloc additionneur 614, ce qui fournit le résultat

$$K_x \left\lfloor \frac{i_y}{C_{elmY}} \right\rfloor + \left\lfloor \frac{i_x}{C_{elmX}} \right\rfloor - K_x = n - k_x \quad \text{(sortie 7)} ;$$

- un bloc soustracteur 616 pour soustraire la valeur 1 au résultat du bloc soustracteur 615, ce qui fournit le résultat $n - K_x - 1$ (sortie 8);
- un bloc soustracteur 617 pour soustraire la valeur 1 au résultat du bloc additionneur 614, ce qui fournit le résultat

$$K_x \left\lfloor \frac{i_y}{C_{elmY}} \right\rfloor + \left\lfloor \frac{i_x}{C_{elmX}} \right\rfloor - 1 = n - 1 \quad \text{(sortie 6)};$$

- un bloc multiplicateur 618 pour multiplier $C_{elmY}$ et le résultat $Q_Y$ du bloc de division euclidienne 612, ce qui fournit le résultat $C_{elmY} * \left\lfloor \frac{i_y}{C_{elmY}} \right\rfloor$ (sortie 4);

- un bloc multiplicateur 619 pour multiplier $C_{elXY}$ et le résultat $Q_X$ du bloc de division euclidienne 612, ce qui fournit le résultat $C_{elmX} * \left\lfloor \frac{i_x}{C_{elmX}} \right\rfloor$ $C_{elmX}$ (sortie 3) .

Dans certains modes de réalisation, les calculs réalisés par les blocs logiques ci-dessus peuvent être instanciés sous la forme de tables de correspondance LUT ou de mémoire. Par ailleurs, les données de paramétrage représentées sous forme de registres sur les figures peuvent être placées dans une mémoire et changer dynamiquement en fonction des adresses d'entrée (par exemple, à une valeur L (composante « Layers ») donnée correspond une configuration). Par exemple, dans le mode de réalisation de la figure 14, un bloc « offset » 621, représenté par une table de correspondance programmable, est utilisé. Il fournit en sortie une valeur de décalage *I* et une valeur de décalage *W*. Les décalages *I* et *W* sont calculés en fonction des entrées $i_L$ et $i_Z$, $i_L$ désignant le numéro de la couche précédente qui a produit l'impulsion et sont ajoutés par un bloc additionneur 622 pour fournir l'adresse @ W. Le décalage *I* est ajouté à la sortie du bloc additionneur 614 en utilisant un autre bloc additionneur 620, ce qui fournit la valeur *n*.

Ces valeurs calculées par le pré-calculateur 203 peuvent être utilisées communément par les unités de calcul 200 concernées par l'impulsion pour :

- Sélectionner une adresse de l'intégration $A_I$ ; et/ou
- Calculer l'adresse *OUT* du neurone de sortie ; et/ou
- Gérer les effets de bord éventuels.

L'unité de routage 202 est configurée pour distribuer les valeurs des coefficients de poids (coefficients du noyau de convolution 12) aux unités de calcul 200 en fonction de $i_X \bmod C_{elmX}$ et $i_y \bmod C_{elmY}$ (ces deux quantités sont communes à toutes les unités de calcul)

La mémoire des coefficients de poids 201 peut utiliser un découpage de la carte de sortie 14 et l'équation (11) : $A_W = W_x + C_{elmX}W_y$, avec $W_x$ qui dépend de $i_x \bmod C_{elmX}$ et $SPE_x$ tandis que $W_y$ dépend de $i_y \bmod C_{elmY}$. Un décalage « offset» peut être en outre appliqué en fonction des composantes L et de Z.

Dans un mode de réalisation, l'unité de routage 202 et le pré-calculateur 203 peuvent être utilisés pour mettre en œuvre le calcul de l'équation 11 et distribuer ce calcul.

Les positions des unités de calcul 200, définies par $SPE_x$ et $SPE_y$, peuvent être choisies de manière à simplifier l'accès aux coefficients de poids du noyau de convolution 12. Différents procédés de lecture ou d'acheminement de données peuvent être mis en œuvre pour accéder et pour acheminer les données en parallèle, de manière contrôlée.

Chaque unité de calcul SPE (200) peut mettre en œuvre un ensemble de fonctions internes comme représenté dans le mode de réalisation de la figure 8, notamment pour calculer l'adresse d'intégration selon l'équation (15) :

$$A_I = I_x + \left\lfloor \frac{I_{elmX}}{C_{elmX}} \right\rfloor I_y, \quad \text{avec } I_x \text{ qui dépend de } \left\lfloor \frac{i_x}{C_{elmX}} \right\rfloor \text{ et } I_y \text{ qui dépend de } \left\lfloor \frac{i_y}{C_{elmY}} \right\rfloor :$$

$$I_x = \left\lfloor \frac{i_x}{C_{elmX}} \right\rfloor ;$$

- Si $i_x \bmod C_{elmX} \geq SPE_x$,
- Si $i_x \bmod C_{elmX} < SPE_x$, $I_x = -1$ ;

$$I_y = \left\lfloor \frac{i_y}{C_{elmY}} \right\rfloor ;$$

- Si $i_y \bmod C_{elmY} \geq SPE_y$,
- Si $i_y \bmod C_{elmY} < SPE_y$, $I_y = -1$.

Pour chaque point de coordonnées $(i_x, i_y)$, il existe 4 possibilités en fonction du résultat de la comparaison entre $i_X \bmod C_{elmX}$ et $SPE_x$ d'une part et $i_y \bmod C_{elmY}$ et $SPE_y$ d'autre part. En fonction du résultat de la comparaison, la fonction de calcul d'adresse d'intégration 2001 peut retourner l'une des 4 valeurs suivantes (correspondant aux sorties 5 à 8 du pré-calculateur) :

- $n$ ;

- $n - 1$ ;

- $n - k_x$ ;

- $n - k_x - 1$.

La vérification des conditions entre $i_x \bmod C_{elmX}$ et $SPE_x$ d'une part et $i_y \bmod C_{elmY}$ et $SPE_y$ d'autre part peut être mise en œuvre par des blocs de comparaison de chaque unité de calcul (200).

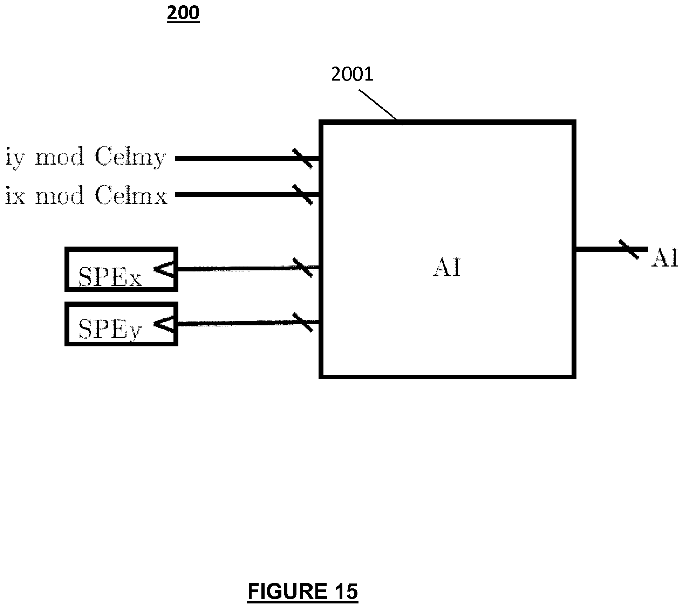

La figure 15 est un schéma représentant les entrées/sorties de la fonction de calcul d'adresse d'intégration 2001 selon certains modes de réalisation.

Dans ces modes de réalisation, la fonction de calcul d'adresse d'intégration 2001 reçoit en entrée les paramètres suivants:

- $i_x \bmod C_{elmX}$ ;
- $i_y \bmod C_{elmY}$ ;
- $SPE_x$ ; et
- $SPE_y$.

A partir de ces paramètres d'entrée, la fonction de calcul d'adresse d'intégration 2001 peut déterminer l'adresse d'intégration associée.

Dans un mode de réalisation, la fonction de calcul d'adresse d'intégration 2001 peut être implémentée sous la forme d'un circuit combinatoire.

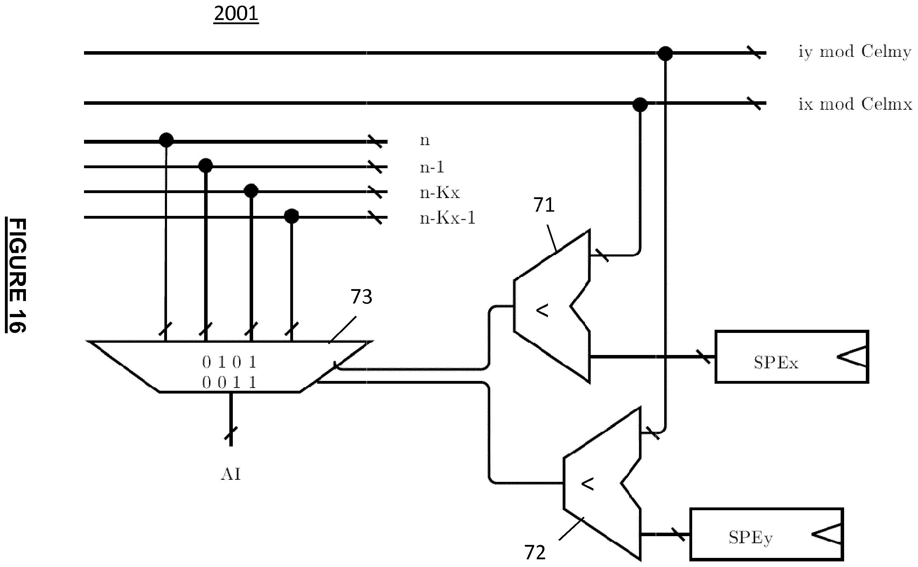

La figure 16 est un circuit combinatoire utilisé pour implémenter la fonction de calcul d'adresse d'intégration 2001 de chaque unité de calcul 200, selon certains modes de réalisation.

La fonction de calcul d'adresse d'intégration 2001 peut comprendre :

- un premier comparateur 71 propre à déterminer si $i_x \bmod C_{elmX}$ est supérieur ou égal à $SPE_x$, le résultat délivré en sortie étant mis à une première valeur si la condition est vérifiée ($i_x$ mod $C_{elmX} \geq SPE_x$) et à une deuxième valeur si la condition n'est pas vérifiée ($i_x$ mod $C_{elmX} < SPE_x$) ;

- un deuxième comparateur 72 propre à déterminer si $i_y$ mod $C_{elmY}$ est supérieur ou égal à $SPE_y$, le résultat délivré en sortie étant mis à la première valeur si la condition est vérifiée ($i_y$ mod $C_{elmY} \geq SPE_y$) et à la deuxième valeur si la condition n'est pas vérifiée ($i_y$ mod $C_{elmY} < SPE_y$) ;
- un sélecteur 73 apte à affecter l'une des valeurs pré-calculées par le pré-calculateur 203 parmi les valeurs $n$, $n - 1$, $n - K_x$, $n - K_x - 1$ à l'adresse d'intégration $A_l$ en fonction du résultat fourni par les comparateurs 71 et 72.

La fonction de sortie 2004 (OUT) de chaque unité de calcul 200 est prévue pour communiquer avec les autres modules de calcul 20 et donc avec les autres couches de convolution du réseau de neurones. La fonction de sortie 2004 (OUT) de chaque unité de calcul 200 est prévue pour communiquer les coordonnées ($o_x$, $o_y$) de l'adresse sur la carte de sortie 14 des neurones qui se sont déclencher.

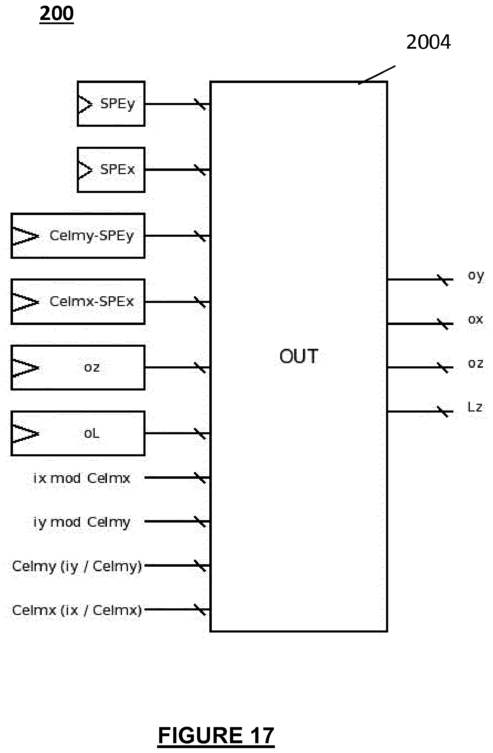

La figure 17 est un schéma représentant les entrées/sorties de la fonction de sortie 2004, selon certains modes de réalisation.

Dans ces modes de réalisation, la fonction de sortie 2004 reçoit en entrée les paramètres suivants:

- $C_{elmX} - SPE_x$ ;
- $C_{elmY} - SPE_y$ ;
- $SPE_x$ ;
- $SPE_y$ ;
- dans les modes de réalisation utilisant des coordonnées X,Y,Z dans un repère 3D, la sortie sur la carte de sortie peut aussi avoir une composante Z noté $o_z$ ou $z\_out$, ainsi qu'un composante L (composante « Layer ») ;
- $i_x$ mod $C_{elmX}$ ;
- $i_y$ mod $C_{elmY}$ ;
-

$$C_{elmX} * \frac{i_x}{C_{elmX}} \; ;$$

-

$$C_{elmY} * \frac{i_y}{C_{elmY}}.$$

A partir de ces paramètres d'entrée, la fonction de calcul de sortie 2004 détermine les coordonnées ($o_x$, $o_y$) de l'adresse sur la carte de sortie de chaque neurone déclenché en mettant en œuvre les équations suivantes :

- Si $i_x$ mod $C_{elmX} \geq SPE_x$ :

$$o_x = SPE_x + C_{elmX} \left\lfloor \frac{i_x}{C_{elmX}} \right\rfloor \quad (19.1).$$

- Sinon, si $i_x$ mod $C_{elmX} < SPE_x$ :

$$o_x = SPE_x + C_{elmX} \left\lfloor \frac{i_x}{C_{elmX}} \right\rfloor - C_{elmX} \quad (19.2);$$

- Si $i_y$ mod $C_{elmY} \geq SPE_y$ :

$$o_y = SPE_y + C_{elmY} \left\lfloor \frac{i_y}{C_{elmY}} \right\rfloor \quad (20.1);$$

- Si $i_y$ mod $C_{elmY} < SPE_y$ :

$$o_y = SPE_y + C_{elmY} \left\lfloor \frac{i_y}{C_{elmY}} \right\rfloor - C_{elmY} \quad (20.2).$$

Dans les équations 19.1, 19.2, 20.1 et 20.2, les termes communs à toutes les unités de calcul 200 (i.e. qui ne dépendent pas de données propre à chaque unité de calcul) comprennent les termes $C_{elmX}\left\lfloor\frac{i_x}{C_{elmX}}\right\rfloor$ et $C_{elmY}\left\lfloor\frac{i_y}{C_{elmY}}\right\rfloor$. Ces termes peuvent être calculés par le pré-calculateur commun 203 prévu dans le module de calcul 20 des unités de calcul.

Les autres termes peuvent être calculés par des fonctions ou blocs internes à chaque unité de calcul 200.

Dans un mode de réalisation, la fonction de sortie 2004 peut être implémentée sous la forme d'un circuit combinatoire.

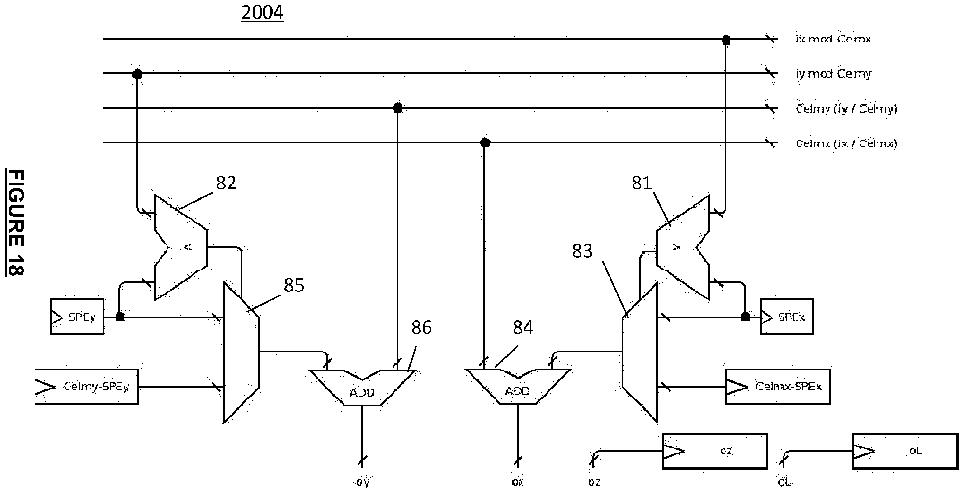

La figure 18 est un circuit combinatoire utilisé pour implémenter la fonction de sortie 2004 de chaque unité de calcul 200, selon un mode de réalisation.

Dans le mode de réalisation de la figure 18, la fonction de calcul de sortie comprend :

- un premier comparateur 81 propre à déterminer si $i_x \bmod C_{elmX}$ est supérieur ou égal à $SPE_x$, le résultat délivré en sortie étant mis à une première valeur si la condition est vérifiée ($i_x \bmod C_{elmX} \geq SPE_x$) et à une deuxième valeur si la condition n'est pas vérifiée ($i_x \bmod C_{elmX} < SPE_x$) ;
- un deuxième comparateur 82 propre à déterminer si $i_y \bmod C_{elmY}$ est supérieur ou égal à $SPE_y$, le résultat délivré en sortie étant mis à la première valeur si la condition est vérifiée ($i_y \bmod C_{elmY} \geq SPE_y$) et à la deuxième valeur si la condition n'est pas vérifiée ($i_y \bmod C_{elmY} < SPE_y$) ;
- un premier multiplexeur 83 pour sélectionner la valeur $SPE_x$ si le premier comparateur 81 fournit la première valeur (i.e. condition vérifiée) ou bien la valeur $C_{elmX} - SPE_x$ si le premier comparateur 82 fournit la deuxième valeur (i.e. condition vérifiée) ;

- un premier additionneur 84 configuré pour ajouter $SPE_x$ et $C_{elmX}\left(\frac{i_x}{C_{elmX}}\right)$ si le multiplexeur 83 sélectionne $SPE_x$ (i.e. condition vérifiée), ce qui fournit $o_x = SPE_x + C_{elmX}\left\lfloor\frac{i_x}{C_{elmX}}\right\rfloor$, ou pour ajouter $C_{elmX} - SPE_x$ et $C_{elmX}\left(\frac{i_x}{C_{elmX}}\right)$ si le premier multiplexeur 83 sélectionne $C_{elmX} - SPE_x$ (i.e. condition non vérifiée), ce qui fournit $o_x = SPE_x + C_{elmX}\left\lfloor\frac{i_x}{C_{elmX}}\right\rfloor - C_{elmX}$ ;

- un deuxième multiplexeur 85 pour sélectionner la valeur $SPE_y$ si le deuxième comparateur 82 fournit la première valeur (i.e. condition vérifiée) ou bien la valeur $C_{elmY} - SPE_y$ si le deuxième comparateur 82 fournit la deuxième valeur (i.e. condition vérifiée),

- un deuxième additionneur 86 configuré pour ajouter $SPE_y$ et $C_{elmY}\left(\frac{i_y}{C_{elmY}}\right)$ si le deuxième multiplexeur 85 sélectionne $SPE_y$ (i.e. condition vérifiée), ce qui fournit $o_y = SPE_y + C_{elmY}\left\lfloor\frac{i_y}{C_{elmY}}\right\rfloor$, ou pour ajouter $C_{elmY} - SPE_y$ et $C_{elmY}\left(\frac{i_y}{C_{elmY}}\right)$ si le deuxième multiplexeur 85 sélectionne $C_{elmY} - SPE_y$ (i.e. condition non vérifiée), ce qui fournit $o_y = SPE_y + C_{elmY}\left\lfloor\frac{i_y}{C_{elmY}}\right\rfloor - C_{elmY}$ .

La fonction d'activation 2000 de chaque unité de calcul 200 est configurée pour activer l'unité de calcul 200 en appliquant une valeur d'entrée E.

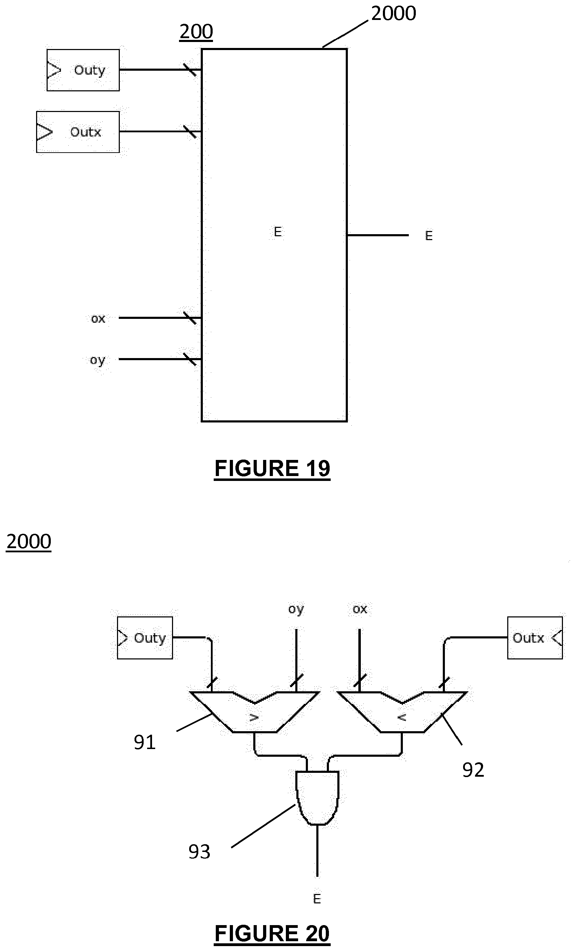

La figure 19 représente les entrées/sorties de la fonction d'activation 2000 selon un mode de réalisation. Dans ce mode de réalisation, la fonction d'activation 2000 reçoit en entrée les paramètres suivants:

- La taille $O_{elmX}$ en x de la matrice de sortie de la couche de convolution données par $O_{elmX} = I_{elmX} - C_{elmX} + 1$ ;

- La taille $O_{elmy}$ en y de la matrice de sortie de la couche de convolution donnée par $O_{elmy} = I_{elmY} - C_{elmY} + 1$;

- $o_x$ ;

- $o_y$.

Bien que la description ci-avant de certains modes de réalisation ait été faite principalement en relation avec un repère à deux dimensions X et Y, à titre d'exemple non limitatif, l'homme du métier comprendra que l'invention s'applique à tout autre repère et notamment à un repère à trois dimensions, X, Y et Z (représentation en 3D, par exemple des images couleur). Dans un tel repère tridimensionnel (X, Y et Z), la fonction d'activation 2000 peut en complément comprendre une entrée $i_z$ (coordonnées en z de l'image d'entrée) définie en considérant le repère tridimensionnel X, Y et Z .

La fonction d'activation 2000 peut délivrer en sortie le paramètre E ayant une valeur binaire (0 ou 1) en fonction des conditions suivantes :

- Si $o_x < O_{elmX}$ et $o_y < O_{elmy}$ , $E = 1$ ;
- Sinon si $o_x \geq O_{elmX}$ ou $o_y \geq O_{elmy}$, $E = 0$.

Dans un mode de réalisation, la fonction d'activation 200 peut être implémentée sous la forme d'un circuit combinatoire.

La figure 20 une représentation combinatoire (sous la forme d'un circuit combinatoire) de la fonction d'activation 2000 selon un exemple de réalisation.

Dans cet exemple de réalisation, la fonction d'activation 2000 est implémentée sous la forme d'un circuit comprenant :

- un premier comparateur 91 propre à déterminer si la coordonnée $o_x$ de sortie en X est strictement inférieur à $O_{elmX}$ ($o_x < O_{elmX}$ le résultat délivré en sortie étant mis à une première valeur (e.g. « 1 ») si cette première condition est vérifiée et à une deuxième valeur (e.g. « 0 ») si la première condition n'est pas vérifiée (i.e. $o_x \geq O_{elmx}$);
- un deuxième comparateur 92 propre à déterminer si la coordonnée $o_x$ de sortie en Y est strictement inférieur à $O_{elmy}$ ($o_y < O_{elmy}$), le résultat délivré en sortie étant mis à la première valeur si cette deuxième condition est vérifiée et à la deuxième valeur si la deuxième condition n'est pas vérifiée (i.e. $o_y \geq O_{elmy}$);
- un premier bloc logique 93 pour délivrer en sortie la valeur 1 si la première condition et la deuxième condition sont vérifiées (si la sortie du premier comparateur 91 et la sortie du deuxième comparateur 92 ont la première valeur) ou pour délivrer en sortie la valeur 0 si l'une au moins de la première condition et la deuxième condition n'est pas vérifiée (i.e. si la sortie du premier comparateur 91 ou la sortie du deuxième comparateur 91 et 92 a la deuxième valeur) ; si la première valeur et la deuxième valeur sont binaires, le bloc logique peut être une porte ET.

Dans certains modes de réalisation, le circuit implémentant la fonction d'activation 2004 peut comprendre:

- un troisième comparateur 94 configuré pour déterminer si la coordonnée maximale $SPE_{z\_max}$ de l'unité de calcul selon un axe Z orthogonal aux axes X et Y est supérieure à la coordonnée sur la carte d'entrée $i_z$ ($SPE_{z\_max} > i_z$), le résultat délivré en sortie du troisième comparateur 94 étant mis à une première valeur si la troisième condition $SPE_{z\_max} > i_z$ est vérifiée et à une deuxième valeur si la troisième condition n'est pas vérifiée (i.e. $SPE_{z\_max} \leq i_z$) ;
- un quatrième comparateur 95 configuré pour déterminer si la coordonnée minimale $SPE_{z\_min}$ de l'unité de calcul selon l'axe Z est inférieure à la coordonnée sur la carte d'entrée $i_z$ ($SPE_{z\_min} < i_z$), le résultat délivré en sortie du quatrième comparateur 95 étant mis à une première valeur si la quatrième condition $SPE_{z\_min} < i_z$ est vérifiée et à une deuxième valeur si la troisième condition n'est pas vérifiée (i.e. $SPE_{z\_min} \geq i_z$),
- un deuxième bloc logique 96 pour délivrer en sortie une valeur 1 si la troisième condition et la quatrième condition sont vérifiées (si la sortie du troisième comparateur 94 et la sortie du quatrième comparateur 95 ont la première valeur) ou pour délivrer en sortie la valeur 0 si l'une au moins de la troisième condition et de la quatrième condition n'est pas vérifiée (i.e. si la sortie du troisième comparateur 94 ou la sortie du quatrième comparateur 95 a la deuxième valeur) ; le deuxième bloc logique 96 peut être une porte ET ;
- un troisième bloc logique 97 pour affecter la première valeur « 1 » au paramètre E si la sortie du deuxième bloc logique 96 et la sortie du troisième bloc logique 97 ont la première valeur « 1 » ou pour affecter la deuxième valeur « 0 » au paramètre E si l'une au moins de la sortie du deuxième bloc logique 96 et de la sortie du troisième bloc logique 97 a la deuxième valeur « 0 »; le troisième bloc logique 97 peut être une porte ET.

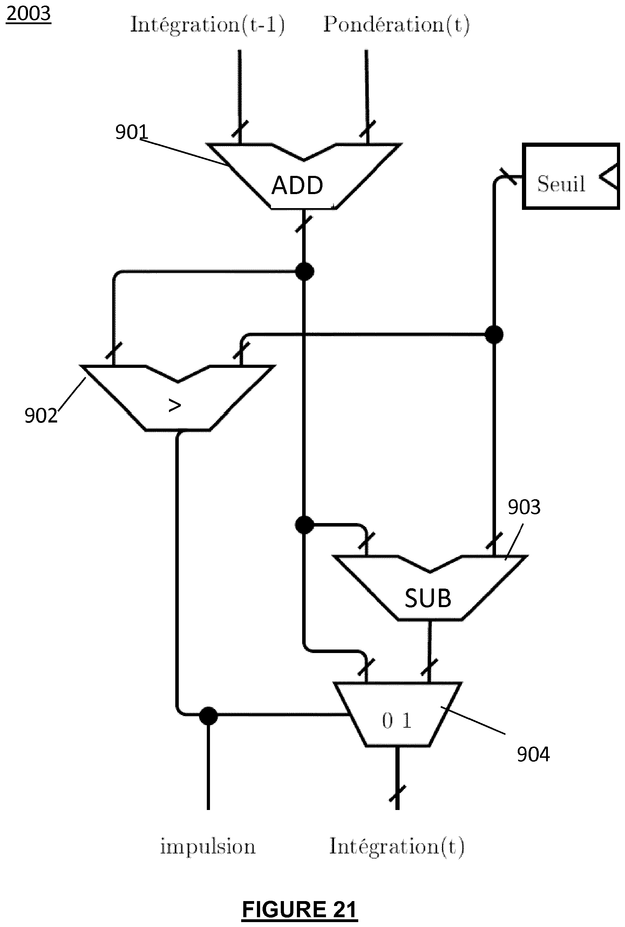

La figure 21 est un schéma représentant un exemple d'implémentation matérielle de l'unité de logique de calcul ALU 2003 de chaque unité de calcul SPE 200, selon certains modes de réalisation. Dans l'exemple de la figure 21, l'unité de logique de calcul ALU 2003 est configuré pour calculer la valeur de sortie de chaque neurone correspondant à l'intégration temporelle à l'instant t à partir de l'intégration temporelle à t-1 et du coefficient de convolution (coefficient de poids) associé à l'instant t, selon le modèle de neurone IF (Integrate &Fire).

Dans le mode de réalisation de la figure 21, l'unité de logique de calcul ALU 2003 comprend :

- un bloc additionneur 901 pour sommer l'intégration temporelle à t-1 (« Intégration (t-1) ») et le coefficient de convolution à l'instant t (Coefficient de poids(t)) et fournir la valeur absolue de la somme obtenue ;
- un comparateur 902 configuré pour comparer le résultat du bloc additionneur 901 à un seuil prédéfini (« seuil ») ;
- un bloc soustracteur 903 configuré pour soustraire le seuil prédéfini (« seuil ») au résultat du bloc additionneur 901 si le résultat du bloc additionneur 901 est strictement supérieur au seuil prédéfini (« seuil ») ;
- Un sélecteur 904 pour affecter au paramètre d'intégration temporel à l'instant t (Integration(t) ou $I_i(t)$) la valeur de sortie du bloc soustracteur 903, si le résultat du bloc additionneur 901 est strictement supérieur au seuil prédéfini (« seuil ») ; sinon, si le résultat du bloc additionneur 901 est inférieur ou égal au seuil, la valeur de l'intégration $I_i(t)$ est remise à 0 dès que le neurone émet une impulsion (période « réfractaire »).

L'unité de gestion des sorties 206 de module de calcul 20 forme un système de sérialisation avec une unité de priorisation. Elle permet de gérer l'ordre de sortie des évènements et peut être utilisé pour des fonctions de « Pooling », en permettant également d'ignorer certains événements. Le protocole série utilisé en sortie peut être quelconque, par exemple AER. La fonction de priorisation peut dépendre de la fonction recherchée. Par exemple :

- Sans « pooling » : la fonction de priorisation peut être arbitraire déterministe selon les adresses des événements ;
- Avec « pooling » : la fonction de priorisation peut donner la priorité aux évènements selon l'historique des évènements de sortie. Pour du « MAX pooling », l'unité de gestion des sorties 206 peut ne transmettre l'événement que si son adresse correspond à l'adresse la plus active dans le regroupement (« pool »). Pour un « AVERAGE pooling », l'unité de gestion des sorties 206 peut ne transmettre l'événement que si le nombre d'événements réellement transmis dans le regroupement (« pool ») devient inférieur à la moyenne du nombre d'activation par adresse distincte dans le regroupement, avant priorisation.

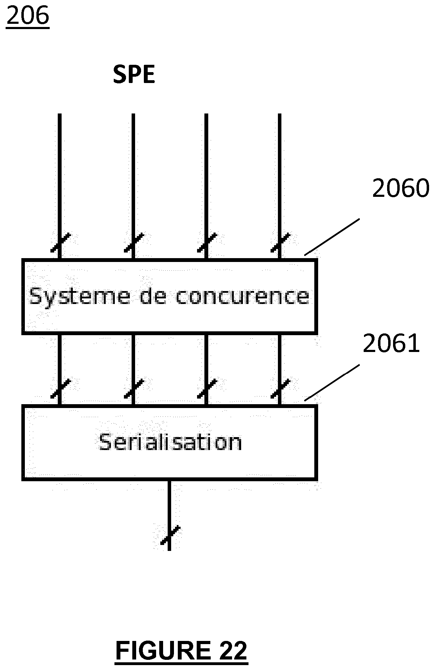

La figure 22 illustre un exemple de réalisation de l'unité de gestion des sorties 206 (PE). Cette unité peut être configurée pour sérialiser les sorties des unités de calcul 200 et/ou pour créer une fonction de regroupement (« pooling » en langue anglo-saxonne).

Dans le mode de réalisation de la figure 22, l'unité de gestion des sorties 206 comprend un système de concurrence 2060 configuré pour gérer la concurrence entre les événements de sortie en fonction de règles de concurrence prédéfinies et une unité de sérialisation 2061 configurée pour sérialiser les événements de sortie (représentés par une adresse de sortie ($o_x$, $o_y$)). L'unité de gestion de sortie 206 reçoit en entrée un bus parallèle de données et délivre ces données en sortie, une par une, sur un bus série, selon un ordre de priorité prédéfini. Les données en sortie de l'unité de gestion de sortie 206 peuvent être délivrées au post-calculateur 207, dans les modes de réalisation où un post-calculateur est prévu en sortie de l'unité de gestion de sortie 206.

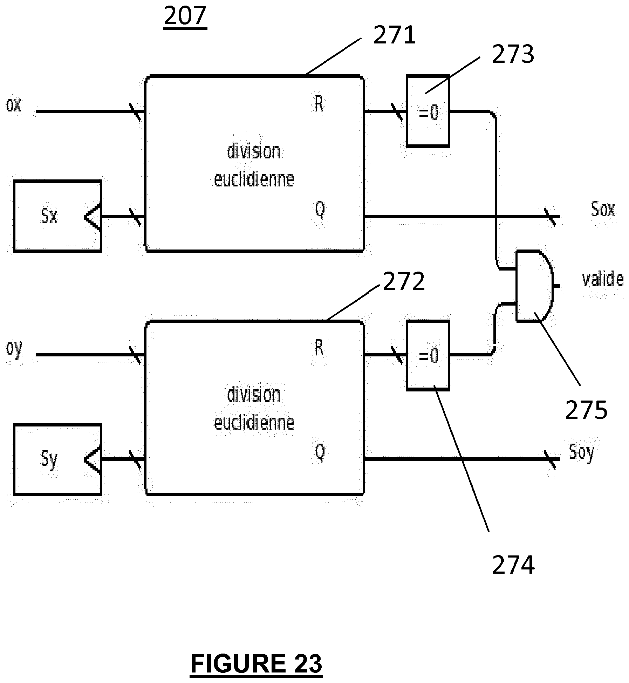

La figure 23 représente un exemple d'implémentation de post-calculateur 207 sous une forme combinatoire. Le post-calculateur 207 de chaque module de calcul peut être configuré pour effectuer des traitements sur l'ensemble des évènements de sortie (définis par une adresse de sortie), comme par exemple pour implémenter un décalage (« stride ») différent de 1. Le post-calculateur 207 peut modifier l'adresse de l'évènement de sortie ($o_x$, $o_y$) ou encore ignorer l'événement de sortie (auquel il n'est pas transmis). Le Post-Calculateur 207 peut comprendre une unité logique de calcul ALU pour modifier l'adresse des évènements de sortie non ignorés. Dans les modes de réalisation où le post-calculateur 207 implémente des décalages « stride » sous forme d'un circuit combinatoire, l'ALU peut comprendre deux blocs 271 et 272 pour effectuer deux divisions euclidiennes de chaque coordonnée de l'adresse de sortie $o_x$ et $o_y$ par chaque coordonnée correspondante du décalage $s_x$ et $s_y$, ce qui donne des nouvelles coordonnées de sortie $So_x$ et $So_y$. Le post-calculateur 207 peut également comprendre des blocs 273, 274 et 275 pour déterminer si l'événement de sortie ainsi modifié est valide et peut déterminer un quotient Q pour la nouvelle valeur des coordonnées de l'adresse $So_x$ et $So_y$.

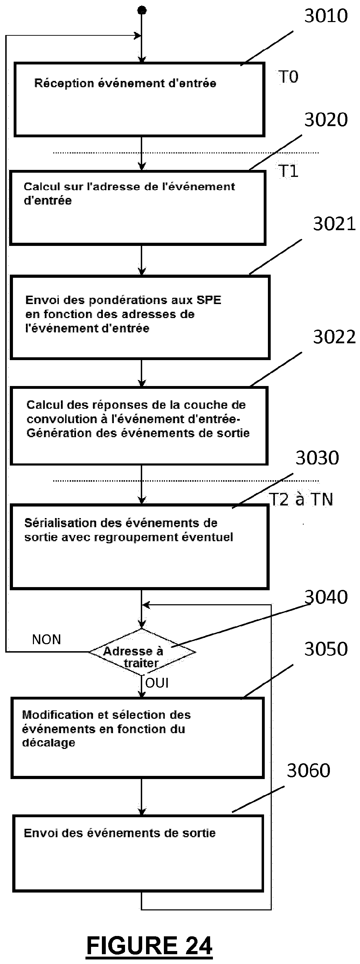

La figure 24 est un organigramme représentant l'acheminement des données dans les différents composants du calculateur 100, selon les exemples de réalisation des figures 6 et 8.

A l'étape 3010, en réponse à un événement d'entrée sur la matrice d'entrée 11 à l'instant T0, l'adresse d'entrée du premier événement est envoyé au pré-calculateur 203. Le pré-calculateur réalise des calculs communs aux unités de calcul 200 à partir des informations d'entrée ($i_x$, $i_y$), des données relatives à la carte d'entrée $C_{elmX}$ et $C_{elmY}$, et de $K_x$.

En particulier, à l'étape 3020, l'adresse d'entrée est lue et le pré-calculateur 203 calcule les adresses d'intégration possibles sur les événements, $n$, $n - 1$, $n - K_x$, $n - K_x - 1$. A l'instant T1, le pré-calculateur transmet les adresses d'intégration possibles au routeur 202 pour le routage des coefficients de poids et aux unités de calcul 200.

A l'instant T1, chaque unité de calcul 200 reçoit des coefficients de poids en fonction de l'adresse de coefficient de poids $A_w$ calculée au niveau de l'unité de calcul par l'unité de routage 202 (étape 3021). Ces données sont acheminées par l'unité de routage 202 aux unités de calcul 200 pour le calcul de la réponse.

Au même instant T1, les réponses de la couche de convolution à l'événement d'entrée sont calculées au niveau de chaque unité de calcul en fonction du coefficient de poids reçue et de la valeur de l'intégration précédente (qui dépendent des impulsions d'entrée) (étape 3022).

Les étapes suivantes ont lieu entre les instants T2 à TN (sérialisation des réponses et envoi des données par les blocs 206, 207, 208).

Plus précisément, à l'étape 3030, les événements de sortie sont sérialisés et le cas échéant une fonction de « pooling » peut être appliquée, au niveau de l'unité de gestion de sortie 206.

Si l'adresse n'est pas à traiter (bloc 3040), les étapes suivantes sont réitérées dès qu'un autre événement est détecté.

Sinon si l'adresse est à traitée, à l'étape 3050, les événements de sortie sont modifiés en fonction du décalage (« stride ») dans le post-calculateur 207 défini par des paramètres de décalage (« stride » en langue anglo-saxone) vertical et horizontal et qui correspond au décalage entre chaque application du noyau de convolution sur la matrice d'entrée.

A l'étape 3060, les événements de sortie sont utilisés pour une nouvelle itération des étapes 3030 à 3060.

Il convient de noter que l'ordre des étapes 3010 à 3060 peut être différent selon les modes de réalisation, et notamment lorsque au moins certaines étapes sont réalisées en parallèle.

Ainsi ces étapes permettent :

- de transmettre à chaque unité de calcul SPE (200) d'un module de calcul de convolution 20, un coefficient de poids définie par une adresse de coefficient de poids $A_w$ et d'associer cette coefficient de poids à un neurone et à une valeur d'intégration définie par une adresse d'intégration $A_I$ en fonction des coordonnées ($SPE_x$ ; $SPE_y$) de chaque unité de calcul, des coordonnées($i_x$ ; $i_y$) du neurone d'entrée sur la carte d'entrée 11 et des spécificités de la carte d'entrée (étapes 3020 et 3021) ;
- de calculer au niveau de chaque unité de calcul 200 les coordonnées correspondantes de sortie $o_x$ et $o_y$ sur la carte de sortie (étape 3022); et
- La valeur des adresses de sorties $OUT$ pour chaque unité de calcul (étape 3022).

Le calculateur 100 selon les modes de réalisation garantit l'efficacité des réseaux de neurones que soit la taille des cartes d'entrée (passage à l'échelle). Il présente par ailleurs une flexibilité en termes de topologie et d'opération, tout en offrant une vitesse de traitement des événements, des performances en surface, en énergie et en calcul très satisfaisantes (les performances sont égales à celles d'une implémentation CPU/GPU), ce qui lui permettent d'être embarqué. Le calculateur 100 peut notamment être utilisé en tant que système de classification à haute performance, selon un mode de fonctionnement parallèle, notamment dans des plateformes embarquées à forte contraintes (tant en surface qu'en énergie).

En mettant en œuvre un partage des coefficients de poids dans une opération de convolution, les unités de calcul 200 peuvent lire en parallèle toute la mémoire des coefficients de poids 201.

Par ailleurs dans les modes de réalisation basés sur des modèles de réseaux de neurones impulsionnels, l'utilisation de neurones impulsionnels permet une parallélisation temporelle entre les couches du réseau de neurones.

L'architecture du calculateur 100 selon certains modes de réalisation permet de mutualiser une partie des calculs des unités de calcul 200 au niveau des modules de calcul 20 (pré-calculateur 203).

La spécialisation du calculateur 100 pour le calcul des réseaux convolutionnel permet de plus une réduction de la complexité des connexions ainsi que du nombre de coefficients de poids à utiliser et du nombre de neurones à instancier. Dans un réseau de neurones convolutionnel (CNN), les coefficients de poids représentent un filtre de convolution et sont partagées par tous les neurones d'une couche. Ainsi le nombre de coefficient de poids est réduit. Cependant, ce partage complexifie la logique de lecture de ces coefficients de poids. Dans une couche de convolution les neurones ne sont connectés qu'à une partie de la carte d'entrée. Cette connexion partielle aux entrées implique qu'une impulsion en entrée ne va pas affecter tous les neurones de la couche. Ainsi, il existe des neurones qui ne peuvent pas se déclencher en même temps. Ces neurones peuvent être réunis dans un même calculateur sans réduire l'aspect parallèle du calcul (i.e. il y a toujours autant de neurones mais moins de calculateurs).

Le calculateur 100 selon les modes de réalisation de l'invention peut être utilisé dans de nombreux domaines d'application, notamment dans des applications où une classification de données est utilisée. Les domaines d'application du calculateur 100 comprennent par exemple des applications de surveillance vidéo avec une reconnaissance en temps réel de personne, des applications interactives de classification mises en œuvre dans des téléphones intelligents (« smartphones ») pour des applications interactives de classification, des applications de fusion de données dans des systèmes de surveillance de domicile etc.

Le calculateur 100 peut être implémenté sous forme analogique ou numérique.

Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

Dans certains modes de réalisation, une mémoire résistive peut être utilisée pour stocker les coefficients des noyaux de convolution (coefficients de poids). Par ailleurs, les ALU 2003 peuvent être analogiques. Dans certains modes de réalisation, le calculateur peut être dépourvu de post-calculateur. En variante, le pré-calculateur et le post-calculateur peuvent fonctionner selon un mode séquentiel.

**Revendications**

1. Calculateur pour calculer au moins une couche de convolution d'un réseau de neurones convolutionnel impulsionnel, en réponse à un événement d'entrée, le réseau de neurones convolutionnel comprenant au moins un noyau de convolution comprenant des coefficients de poids et étant représenté par une matrice de convolution dans un repère de dimensions données, chaque couche de convolution comprenant au moins une carte de sortie comprenant un ensemble de neurones de sortie connectés à des neurones d'entrée d'au moins une partie d'une carte d'entrée du réseau de neurones, **caractérisé en ce qu'**il comprend au moins un module de convolution (20) configuré pour calculer ladite au moins une couche de convolution, chaque module de convolution comprenant un ensemble d'unités de calcul élémentaires (200) pour calculer la valeur interne des neurones de la couche de convolution déclenchés par ledit événement d'entrée, et au moins une mémoire de valeurs de neurones (2002) pour stocker les valeurs internes des neurones calculées, l'événement d'entrée étant défini par une adresse d'entrée dans ledit repère, ladite adresse d'entrée comprenant les coordonnées de l'événement d'entrée sur la carte d'entrée, chaque unité de calcul élémentaire étant associée à des coordonnées correspondant aux coordonnées du coefficient de poids associé à ladite matrice de convolution dans ledit repère, chaque module de convolution (20) étant configuré pour mettre en correspondance les coefficients de poids du noyau avec certaines au moins des unités de calcul élémentaires du module en parallèle, et **en ce que** chaque module de convolution est configuré pour calculer, pour chaque événement d'entrée et pour chaque unité de calcul élémentaire (200), une ou plusieurs adresses de stockage des valeurs internes de neurones calculées à partir de l'événement d'entrée et d'au moins un paramètre de la couche de convolution à traiter, chaque unité de calcul élémentaire (200) étant apte à sélectionner une adresse de stockage parmi lesdites adresses de stockage calculées pour stocker les valeurs internes des neurones calculées par ladite unité de calcul dans une mémoire de valeur de neurones en fonction des coordonnées de ladite unité de calcul dans ledit repère.

2. Calculateur selon la revendication 1, **caractérisé en ce que** chaque événement d'entrée est une impulsion d'entrée apte à être reçue par un ou plusieurs neurones, et **en ce que**, pour chaque événement d'entrée, chaque unité de calcul (200) est associée à un coefficient de poids du noyau de convolution, chaque unité de calcul élémentaire étant configurée pour calculer la valeur d'un ensemble de neurones indépendants déclenchés par des événements d'entrée, en fonction du coefficient de poids associé à ladite unité de calcul élémentaire, deux neurones indépendants étant configurés pour ne pas recevoir une même impulsion d'entrée.

3. Calculateur selon la revendication 1, **caractérisé en ce que** chaque module de convolution (20) comprend au moins une mémoire (201) pour stocker les coefficients de poids d'au moins un noyau de convolution et **en ce que** ladite mémoire de coefficients de poids est accessible en parallèle par lesdites unités de calcul élémentaires (200).

4. Calculateur selon la revendication 3, **caractérisé en ce que** chaque module de convolution (20) comprend une unité de routage (202) configurée pour distribuer les coefficients de poids de la mémoire (201) aux unités de calcul élémentaires (200) au moyen d'un bus de données comprenant un ensemble de lignes portant les coefficients de poids, et **en ce que** chaque module de convolution (20) est configuré pour calculer les adresses des coefficients de poids dans ledit bus de données à affecter aux unités de calcul élémentaire (200) en fonction de l'événement d'entrée, l'unité de routage (202) utilisant les adresses de coefficients de poids pour distribuer les coefficients de poids de ladite mémoire (201) aux unités de calcul élémentaires.

5. Calculateur selon l'une des revendications précédentes, **caractérisé en ce que** lesdits paramètres de la couche de convolution comprennent au moins un paramètre choisi parmi la taille de la matrice de convolution et la taille de la matrice de sortie.

6. Calculateur selon l'une des revendications précédentes, **caractérisé en ce que** chaque module de convolution (20) comprend au moins une mémoire de valeurs de neurones (2002) externe aux unités de calcul élémentaires (200).

**7.** Calculateur selon l'une des revendications précédentes, **caractérisé en ce que** chaque module de convolution (20) comprend une mémoire de valeurs de neurones (2002) agencée dans chaque unité de calcul élémentaire (200).

**8.** Calculateur selon l'une des revendications précédentes, **caractérisé en ce que** chaque unité de calcul élémentaire (200) est configurée pour calculer la valeur interne de chaque neurone déclenché par ledit événement d'entrée selon un modèle computationnel de neurone associé à une fonction algébrique non linéaire.

**9.** Calculateur selon la revendication 8, **caractérisé en ce que** chaque unité de calcul comprend une unité logique de calcul (2003) configurée pour calculer une valeur de sortie d'un neurone en appliquant ladite fonction associée au modèle.

**10.** Calculateur selon l'une des revendications précédentes, **caractérisé en ce que** la valeur interne d'un neurone calculée par une unité de calcul donnée est l'intégrale temporelle des valeurs entrées reçues par ledit neurone, chaque valeur d'entrée étant pondérée par le coefficient de poids associé à ladite unité de calcul pour chaque valeur d'entrée du neurone.

**11.** Calculateur selon l'une des revendications précédentes, **caractérisé en ce que** chaque unité de calcul comprend en outre une unité de sortie (2004) configurée pour déterminer l'adresse de sortie sur la carte de sortie (14) des neurones déclenchés et pour communiquer ladite adresse de sortie aux autres modules de convolution (20) du calculateur.

**12.** Calculateur selon l'une des revendications précédentes, **caractérisé en ce que** les modules (20) de convolution sont interconnectés par un système d'interconnexion.

**13.** Calculateur selon l'une des revendications précédentes, **caractérisé en ce que** le nombre d'unités de calcul élémentaires est au moins égal au nombre de poids synaptiques du noyau de convolution.

**Patentansprüche**

**1.** Rechner zum Berechnen mindestens einer Faltungsschicht eines impulsiven neuronalen Faltungsnetzwerks als Reaktion auf ein Eingangsereignis, wobei das neuronale Faltungsnetzwerk mindestens einen Faltungskern umfasst, der Gewichtungskoeffizienten umfasst und durch eine Faltungsmatrix in einem Koordinatensystem mit gegebenen Dimensionen dargestellt wird, wobei jede Faltungsschicht mindestens eine Ausgangskarte umfasst, die einen Satz von Ausgangsneuronen umfasst, die mit Eingangsneuronen von mindestens einem Teil einer Eingangskarte des neuronalen Netzwerks verbunden sind, **dadurch gekennzeichnet, dass** er mindestens ein Faltungsmodul (20) umfasst, das zum Berechnen der mindestens einen Faltungsschicht konfiguriert ist, wobei jedes Faltungsmodul einen Satz von elementaren Recheneinheiten (200) zum Berechnen des internen Werts der durch das Eingangsereignis ausgelösten Neuronen der Faltungsschicht und mindestens einen Neuronenwertspeicher (2002) zum Speichern der berechneten internen Neuronenwerte umfasst, wobei das Eingangsereignis durch eine Eingangsadresse in dem Koordinatensystem definiert ist, wobei die Eingangsadresse die Koordinaten des Eingangsereignisses auf der Eingangskarte umfasst, wobei jede elementare Recheneinheit mit Koordinaten assoziiert ist, die den Koordinaten des mit der Faltungsmatrix in dem Koordinatensystem assoziierten Gewichtungskoeffizienten entsprechen, wobei jedes Faltungsmodul (20) so konfiguriert ist, dass es die Gewichtungskoeffizienten des Kerns mit mindestens einigen der elementaren Recheneinheiten des parallelen Moduls in Übereinstimmung bringt, und dadurch, dass jedes Faltungsmodul zum Berechnen, für jedes Eingangsereignis und für jede elementare Recheneinheit (200), einer oder mehrerer Speicheradressen für die auf der Basis des Eingangsereignisses berechneten internen Werte von Neuronen und für mindestens einen Parameter der zu verarbeitenden Faltungsschicht konfiguriert ist, wobei jede elementare Recheneinheit (200) zum Auswählen einer Speicheradresse aus den berechneten Speicheradressen ausgelegt ist, um die von der Recheneinheit berechneten internen Neuronenwerte in einem Neuronenwertspeicher in Abhängigkeit von den Koordinaten der Recheneinheit in dem Koordinatensystem zu speichern.

**2.** Rechner nach Anspruch 1, **dadurch gekennzeichnet, dass** jedes Eingangsereignis ein Eingangsimpuls ist, der von einem oder mehreren Neuronen empfangen werden kann, und dadurch, dass für jedes Eingangsereignis jede Recheneinheit (200) mit einem Gewichtungskoeffizienten des Faltungskerns assoziiert ist, wobei jede elementare Recheneinheit zum Berechnen des Wertes eines Satzes unabhängiger Neuronen, ausgelöst durch Eingangsereignisse, in Abhängigkeit von dem mit der elementaren Recheneinheit assoziierten Gewichtungskoeffizienten konfiguriert ist, wobei zwei unabhängige Neuronen so konfiguriert sind, dass sie nicht den gleichen Eingangsimpuls empfangen.

3. Rechner nach Anspruch 1, **dadurch gekennzeichnet, dass** jedes Faltungsmodul (20) mindestens einen Speicher (201) zum Speichern der Gewichtungskoeffizienten mindestens eines Faltungskerns umfasst, und dadurch, dass die elementaren Recheneinheiten (200) parallel auf den Speicher von Gewichtungskoeffizienten zugreifen können.

4. Rechner nach Anspruch 3, **dadurch gekennzeichnet, dass** jedes Faltungsmodul (20) eine Routing-Einheit (202) umfasst, die zum Verteilen der Gewichtungskoeffizienten aus dem Speicher (201) zu den elementaren Rechenenheiten (200) mittels eines Datenbusses konfiguriert ist, der einen Satz von die Gewichtungskoeffizienten führenden Leitungen umfasst, und dadurch, dass jedes Faltungsmodul (20) zum Berechnen der Adressen der Gewichtungskoeffizienten in dem Datenbus konfiguriert ist, um den elementaren Rechenenheiten (200) in Abhängigkeit vom Eingangsereignis die Routing-Einheit (202) zuzuordnen, die die Adressen von Gewichtungskoeffizienten benutzen, um die Gewichtungskoeffizienten aus dem Speicher (201) an die elementaren Rechenenheiten (200) zu verteilen.

5. Rechner nach einem der vorherigen Ansprüche, **dadurch gekennzeichnet, dass** die Parameter der Faltungsschicht mindestens einen Parameter umfassen, der aus der Größe der Faltungsmatrix und der Größe der Ausgangsmatrix ausgewählt ist.

6. Rechner nach einem der vorherigen Ansprüche, **dadurch gekennzeichnet, dass** jedes Faltungsmodul (20) mindestens einen Neuronenwertspeicher (2002) außerhalb der elementaren Rechenenheiten (200) umfasst.

7. Rechner nach einem der vorherigen Ansprüche, **dadurch gekennzeichnet, dass** jedes Faltungsmodul (20) einen Neuronenwertspeicher (2002) umfasst, der in jeder elementaren Rechenenheit (200) vorgesehen ist.

8. Rechner nach einem der vorherigen Ansprüche, **dadurch gekennzeichnet, dass** jede elementare Rechenenheit (200) zum Berechnen des internen Werts jedes durch das Eingangsereignis ausgelösten Neurons gemäß einem mit einer nichtlinearen algebraischen Funktion assoziierten Neuronenrechenmodell konfiguriert ist.

9. Rechner nach Anspruch 8, **dadurch gekennzeichnet, dass** jede Rechenenheit eine Rechenlogikeinheit (2003) umfasst, die zum Berechnen eines Ausgangswerts eines Neurons durch Anwenden der mit dem Modell assoziierten Funktion konfiguriert ist.

10. Rechner nach einem der vorherigen Ansprüche, **dadurch gekennzeichnet, dass** der durch eine gegebene Rechenenheit berechnete interne Wert eines Neurons das Zeitintegral der von dem Neuron empfangenen Eingangswerte ist, wobei jeder Eingangswert für jeden Eingangswert des Neurons mit dem mit der Rechenenheit assoziierten Gewichtungskoeffizienten gewichtet wird.

11. Rechner nach einem der vorherigen Ansprüche, **dadurch gekennzeichnet, dass** jede Rechenenheit ferner eine Ausgabeeinheit (2004) umfasst, die zum Bestimmen der Ausgangsadresse auf der Ausgangskarte (14) der ausgelösten Neuronen und zum Übermitteln dieser Ausgangsadresse an die anderen Faltungsmodule (20) des Rechners konfiguriert ist.

12. Rechner nach einem der vorherigen Ansprüche, **dadurch gekennzeichnet, dass** die Faltungsmodule (20) durch ein Verbindungssystem miteinander verbunden sind.

13. Rechner nach einem der vorherigen Ansprüche, **dadurch gekennzeichnet, dass** die Anzahl von elementaren Rechenenheiten mindestens gleich der Anzahl von synaptischen Gewichtungen des Faltungskerns ist.

**Claims**

1. A processor for computing at least one convolution layer of a spiking convolutional neural network, in response to an input event, the convolutional neural network comprising at least one convolution kernel comprising weight coefficients and represented by a convolution matrix in a coordinate system of given dimensions, each convolution layer comprising at least one output map comprising a set of output neurons that are connected to input neurons of at least one portion of an input map of the neural network, **characterized in that** it comprises at least one convolution module (20) configured to compute said at least one convolution layer, each convolution module comprising a set of elementary processing units (200) for computing the internal value of the convolution layer neurons that are triggered by said input event, and at least one neuron value memory (2002) for storing the computed internal values of the neurons, the input event being defined by an input address in said coordinate system, said input address comprising the coordinates of the input event on the input map, each elementary processing unit being associated with coordinates corresponding to the coordinates of the weight coefficient associated with said convolution matrix in said coordinate system, each convolution module (20) being configured to map the weight coefficients of the kernel with at least some of the elementary processing units of the module in parallel, and **in that** each convolution module is configured to compute, for each input event and for each elementary processing unit (200), one or more storage addresses for the internal values of the neurones computed on the basis of the input event and of at least one parameter of the convolution layer to be processed, each elementary processing unit (200) being able to select a storage address from said computed storage addresses for storing the internal values of the neurons computed by said processing unit in a neuron value memory as a function of the coordinates of said processing unit in said coordinate system.

2. The processor according to claim 1, **characterized in that** each input event is an input spike that can be received by one or more neurons, and **in that**, for each input event, each processing unit (200) is associated with a convolution kernel weight coefficient, each elementary processing unit being configured to compute the value of a set of independent neurons triggered by input events, as a function of the weight coefficient associated with said elementary processing unit, two independent neurons being configured not to receive one and the same input spike.

3. The processor according to claim 1, **characterized in that** each convolution module (20) comprises at least one memory (201) for storing the weight coefficients of at least one convolution kernel and **in that** said weight coefficient memory is accessible in parallel by said elementary processing units (200).

4. The processor according to claim 3, **characterized in that** each convolution module (20) comprises a routing unit (202) that is configured to distribute the weight coefficients of the memory (201) to the elementary processing units (200) by means of a data bus comprising a set of lines bearing the weight coefficients, and **in that** each convolution module (20) is configured to compute the weight coefficient addresses in said data bus to be assigned to the elementary processing units (200) as a function of the input event, the routing unit (202) using the weight coefficient addresses to distribute the weight coefficients of said memory (201) to the elementary processing units (200).

5. The processor according to one of the preceding claims, **characterized in that** said parameters of the convolution layer comprise at least one parameter chosen from the size of the convolution matrix and the size of the output matrix.

6. The processor according to one of the preceding claims, **characterized in that** each convolution module (20) comprises at least one neuron value memory (2002) that is external to the elementary processing units (200).

7. The processor according to one of the preceding claims, **characterized in that** each convolution module (20) comprises a neuron value memory (2002) arranged in each elementary processing unit (200).

8. The processor according to one of the preceding claims, **characterized in that** each elementary processing unit (200) is configured to compute the internal value of each neuron triggered by said input event according to a computational neuron model associated with a nonlinear algebraic function.

9. The processor according to claim 8, **characterized in that** each processing unit comprises a logic processing unit (2003) configured to compute an output value of a neuron by applying said function associated with the model.

10. The processor according to one of the preceding claims, **characterized in that** the internal value of a neuron, computed by a given processing unit, is the temporal integral of the input values received by said neuron, each input value being weighted by the weight coefficient associated with said processing unit for each input value of the neuron.

11. The processor according to one of the preceding claims, **characterized in that** each processing unit further comprises an output unit (2004) that is configured to determine the output address on the output map (14) of the triggered neurons and to communicate said output address to the other convolution modules (20) of the processor.

12. The processor according to one of the preceding claims, **characterized in that** the convolution modules (20) are interconnected by an interconnect system.

13. The processor according to one of the preceding claims, **characterized in that** the number of elementary processing units is at least equal to the number of synaptic weights of the convolution kernel.

**FIGURE 1**

11

Carte(s) d'entrée

Cartes de sortie constituant une
couche de convolution

14

12

Noyaux

| | 1 | 2 | 3 | 4 | 5 | 6 |
|---|---|---|---|---|---|---|
| 1 | X | | | | X | X |
| 2 | X | X | | | | X |
| 3 | | X | X | | | X |
| 4 | | | X | X | | X |
| 5 | | | | X | X | X |

→ Cartes de sortie

Connexion =
un noyau de
convolution

Cartes d'entrée

**FIGURE 2**

**Carte d'entrée**
(matrice $I_{i,j}$)

**Carte de sortie**
(matrice $O_{i,j}$)

11

$O_{1,1}$

14

**Noyau**
(matrice $K_{k,l}$)

| 0 | 1 | -1 |
|---|---|----|
| -1 | 1 | -1 |
| -1 | 1 | 0 |

Calcul 1$^{er}$ coefficient de sortie

| 1 | 2 | 3 |
|---|---|---|
| 4 | 5 | 6 |
| 7 | 8 | 9 |

=

| 0 | 1 | -1 |
|---|---|----|
| -1 | 1 | -1 |
| -1 | 1 | 0 |

12

|   | 2 | 3 | 4 | 5 | 6 |
|---|---|---|---|---|---|
| 7 | 8 | 9 | 10 | 11 | 12 |
| 13 | 14 | 15 | 16 | 17 | 18 |
| 19 | 20 | 21 | 22 | 23 | 24 |
| 25 | 26 | 27 | 28 | 29 | 30 |
| 31 | 32 | 33 | 34 | 35 | 36 |

$O_{1,2}$

14

Calcul 2$^{ème}$ coefficient de sortie

| 0 | 1 | -1 |
|---|---|----|
| -1 | 1 | -1 |
| -1 | 1 | 0 |

11

|   |   | 3 | 4 | 5 | 6 |
|---|---|---|---|---|---|
| 7 | 8 | 9 | 10 | 11 | 12 |
| 13 | 14 | 15 | 16 | 17 | 18 |
| 19 | 20 | 21 | 22 | 23 | 24 |
| 25 | 26 | 27 | 28 | 29 | 30 |
| 31 | 32 | 33 | 34 | 35 | 36 |

11

14

Calcul dernier coefficient de sortie

| 0 | 1 | -1 |
|---|---|----|
| -1 | 1 | -1 |
| -1 | 1 | 0 |

$O_{O_L..O_{...}}$

**FIGURE 3**

**FIGURE 4**

100

CALCULATEUR

**FIGURE 5**

**FIGURE 6**

**FIGURE 7**

FIGURE 8

**FIGURE 9**

Chevauchement

11

D < 2

14

143

141

140

D = 2

Carte de sortie

Carte d'Entrée

**FIGURE 10**

|   | 0 | 1 | 2 | 3 | 4 | 5 |
|---|---|---|---|---|---|---|
| 0 | 0 | 1 | 2 | 0 | 1 | 2 |
| 1 | 3 | 4 | 5 | 3 | 4 | 4 |
| 2 | 6 | 7 | 8 | 6 | 7 | 8 |
| 3 | 0 | 1 | 2 | 0 | 1 | 2 |
| 4 | 3 | 4 | 5 | 3 | 4 | 4 |
| 5 | 6 | 7 | 8 | 6 | 7 | 8 |

A

|   | 0 | 1 | 2 | 3 | 4 | 5 |
|---|---|---|---|---|---|---|
| 0 | 0 | 0 | 0 | 1 | 1 | 1 |
| 1 | 0 | 0 | 0 | 1 | 1 | 1 |
| 2 | 0 | 0 | 0 | 1 | 1 | 1 |
| 3 | 2 | 2 | 2 | 3 | 3 | 3 |
| 4 | 2 | 2 | 2 | 3 | 3 | 3 |
| 5 | 2 | 2 | 2 | 3 | 3 | 3 |

B

## FIGURE 11

500

Réception des coordonnées d'un neurone déclenché ($i_x$, $i_y$)

502

Déterminer l'es adresses de coefficient de poids $A_W$

503

Déterminer les adresses possibles de valeurs d'intégration $A_I$

504

Déterminer les adresses de sortie OUT

506

Calculer la convolution

**FIGURE 12**

203

iL

iz

ix

iy

Celmx

Celmy

Kx

Pré
Calculateur

@W

Celmx*(ix/Celmx)

ix mod Celmx

Celmy*(iy/Celmy)

iy mod Celmy

n-1

n

n-Kx-1

n-Kx

**FIGURE 13**

**FIGURE 14**

**200**

2001

iy mod Celmy

ix mod Celmx

SPEx

SPEy

AI

AI

**FIGURE 15**

**FIGURE 16**

**200**

2004

SPEy

SPEx

Celmy-SPEy

Celmx-SPEx

oz

oL

ix mod Celmx

iy mod Celmy

Celmy (iy / Celmy)

Celmx (ix / Celmx)

OUT

oy

ox

oz

Lz

**FIGURE 17**

**FIGURE 18**

200

2000

Outy

Outx

E

E

ox

oy

**FIGURE 19**

2000

oy    ox

Outy

Outx

91

92

>

<

93

E

**FIGURE 20**

2003    Intégration(t-1)    Pondération(t)

**FIGURE 21**

206

**SPE**

2060

Systeme de concurence

2061

Serialisation

**FIGURE 22**

FIGURE 23

**FIGURE 24**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **K. FUKUSHIMA.** Neocognitron: A self-organizing neural network model for a mechanism of pattern recognition unaffected by shift in position. *Biological Cybernetics,* 1980, vol. 36 (4), ISSN 0340-1200, 193-202
- **D. C. CIRESAN ; U. MEIER ; J. MASCI ; L. M. GAMBARDELLA ; J. SCHMIDHUBER.** Flexible, high performance convolutional neural networks for image classification. Proceedings of the Twenty-Second International Joint Conférence on Artificial Intelligence - Volume Two. *IJCAI,* 2011, vol. 11, ISBN 978-1-57735-514-4, 1237-1242
- **L. CAMUNAS-MESA ; C. ZAMARRENO-RAMOS ; A. LINARES-BARRANCO ; A. ACOSTA-JIMENEZ ; T. SERRANO-GOTARREDONA ; B. LINARES-BARRANCO.** An event-driven multi-kernel convolution processor module for event-driven vision sensors. *Solid-State Circuits, IEEE Journal of,* 2012, vol. 47 (2), ISSN 0018-9200, 504-517
- **PAUL A. MEROLLA ; JOHN V. ARTHUR ; RODRIGO ALVAREZ-ICAZA ; ANDREW S. CASSIDY ; JUN SAWADA ; FILIPP AKOPYAN ; BRYAN L. JACKSON ; NABIL IMAM ; CHEN GUO ; YUTAKA NAKAMURA.** *A million spiking-neuron integrated circuit with a scalable communication network and interface Science,* 08 Août 2014, vol. 345 (6197), 668-673
- **T. SERRANO-GOTARREDONA et al.** ConvNets experiments on SpiNNaker. *IEEE International Symposium on Circuits and Systems (ISCAS),* 01 Mai 2015, ISBN 978-1-4799-8391-9, 2405-2408